# EUROPEAN PATENT APPLICATION

(11) **EP 4 503 562 A1**
(43) Date of publication of application: **05.02.2025**
(21) Application number: 23778047.3
(22) Date of filing: 24.03.2023
(51) Int. Cl.: H04L 47/24

(54) **POLICY CONTROL METHOD AND DEVICE AND STORAGE MEDIUM**

(30) Priority: 29.03.2022 CN 202210323989; 06.05.2022 CN 202210488188
(71) Applicant: China Mobile Communication Co., Ltd Research Institute, Beijing 100053 (CN); CHINA MOBILE COMMUNICATIONS GROUP CO., LTD., Beijing 100032 (CN)
(72) Inventor: LIU, Tangqing, Beijing 100032 (CN); WANG, Dan, Beijing 100032 (CN); SUN, Tao, Beijing 100032 (CN); LU, Lu, Beijing 100032 (CN)
(74) Representative: Maiwald GmbH
(86) International application number: PCT/CN2023/083703
(87) International publication number: WO 2023/185679

(57) **Abstract**

The present invention provides a policy control method and device and a storage medium, comprising: a first network function decides a first policy according to a first parameter, and a first entity receives a second policy, wherein the second policy is directly or indirectly sent by the first network function.

## Description

### CROSS-REFERENCE TO RELATED APPLICATIONS

This application claims the benefit of priority to Chinese Patent Application No. 202210323989.4, filed on March 29, 2022, and priority to Chinese Patent Application No. 202210488188.3, filed on May 06, 2022, the contents of which are incorporated herein by reference in their entire entities for all purposes.

### TECHNICAL FIELD

The present disclosure relates to the field of a communication technology, and in particular to a method and device for policy control, and a storage medium.

### BACKGROUND

A policy control function (PCF) issues policy and charging control (PCC) rules in the case that a session of a user equipment (UE) is established. When a next generation radio access network (NG-RAN) determines that a guaranteed flow bit rate (GFBR), a packet delay budget (PDB), or a packet error rate (PER) cannot be satisfied, the NG-RAN may send a "GFBR can no longer be guaranteed" notification to a session management function (SMF). Before sending the notification, the NG-RAN may check whether the GFBR, the PDB, and the PER, which are currently satisfied, can be matched with a certain alternative quality of service (QoS) profile in a list of alternative QoS profiles based on the priority of the alternative QoS profiles. If an alternative QoS profile is matched, the NG-RAN may carry a reference to the matched alternative QoS profile in the notification that is sent to the SMF (only the first matched alternative QoS profile, i.e., the alternative QoS profile with the highest priority, is sent).

The related art is deficient in that an adjustment of a QoS for a single flow is inapplicable to that for a service type of multiple flows.

### SUMMARY

The present disclosure provides in embodiments a method and device for policy control, and a storage medium, which solve the problem that an adjustment of a quality of service (QoS) for a single flow is inapplicable to that for a service type of multiple flows.

The present disclosure provides the following embodiments.

The present disclosure provides in an embodiment a method for policy control, including: determining a first policy by a first network function based on a first parameter.

In an embodiment, the first policy is configured for multi-flow coordination transmission or multi-flow coordination handling.

In an embodiment, the first policy may be one or more of: a multi-modality flow network policy, a multi-flow network policy, a multi-flow packet network policy, a multi-flow coordination network policy, a coordination transmission network policy, or a coordination network policy.

In an embodiment, the first policy includes information for indicating a flow association relationship, and/or information for indicating a time delay difference.

In an embodiment, the information for indicating the flow association relationship indicates that a service flow is a multi-modality flow, and/or that a service flow is a flow in a multi-modality flow, and/or that a service flow is a flow in a multi-flow packet.

In an embodiment, the time delay difference indicates an end to end time delay difference between a plurality of flows, or a radio interface time delay difference between a plurality of flows, or a network time delay difference between a plurality of flows.

In an embodiment, the first policy is determined by the first network function based on a first parameter provided by a second network function.

In an embodiment, the first parameter includes one or more of: an application requirement, a policy requirement, an terminal identification (ID), a terminal address, an application function identifier, a flow description, a quality of service (QoS) requirement, an alternative QoS, a flow time delay requirement, a flow time delay, a time delay difference between a plurality of flows, a service flow rate, a maximum data burst volume, an association ID, a bandwidth, or a delay difference.

In an embodiment, the first network function is one or more of: a policy control function (PCF), a network exposure function (NEF), a radio access network (RAN), a next generation radio access network (NG-RAN), or a base station.

In an embodiment, the multi-flow coordination transmission or the multi-flow coordination handling is configured to support that a plurality of service flows arrive simultaneously at a terminal and/or an application server and/or a base station and/or a user plane function (UPF), or maintain that a plurality of service flows arrive at a terminal and/or an application server and/or a base station and/or a UPF with a constant time delay difference, or ensure that a plurality of service flows arrive at a terminal or an application server or a base station or a UPF within a required time delay difference.

In an embodiment, the second network function is one or a combination of: an application function (AF), an NEF, a third-party server, or a session management function (SMF).

In an embodiment, in the case that information for indicating a time delay difference does not satisfy a flow time delay requirement, the first network function sends a first notification to a fourth network function, and the fourth network function adjusts an application layer.

In an embodiment, in the case that information for indicating a time delay difference does not satisfy a flow time delay requirement, the first network function performs adjustment based on a first rule.

In an embodiment, the first rule is policy and charging control (PCC) rules.

In an embodiment, the fourth network function is at least one of: an AF, an edge application, an edge application server, an edge application platform, or an NEF.

In an embodiment, the first notification includes at least one of: a flow time delay, a time delay difference, a delay difference, an inter-flow time delay difference, or a time delay difference policy.

The present disclosure provides in an embodiment a method for policy control, including: receiving a second policy by a first entity, in which the second policy is sent directly or indirectly by a first network function.

In an embodiment, the second policy is configured for multi-flow coordination transmission or multi-flow coordination handling.

In an embodiment, the second policy includes one or more of: a multi-modality flow network policy, a multi-flow packet network policy, a flow network policy, an association network policy or a coordination network policy, information for indicating a flow association relationship, a time delay, a time delay difference, a rate, a maximum data burst volume, an alternative QoS, or a jitter requirement.

In an embodiment, the jitter requirement is a radio interface jitter requirement for a base station or an end to end jitter requirement for a base station.

In an embodiment, the multi-flow coordination transmission or the multi-flow coordination handling is configured to support that a plurality of service flows arrive simultaneously at a terminal and/or an application server and/or a base station, or maintain that a plurality of service flows arrive at a terminal and/or an application server and/or a base station with a constant time delay difference, or ensure that a plurality of service flows arrive at a terminal and/or an application server and/or a base station within a required time delay difference.

In an embodiment, in the case that the alternative QoS is used in an insufficient or congested network resource, the first entity selects a suitable QoS policy in the alternative QoS.

In an embodiment, the first entity selects the suitable QoS policy in the alternative QoS and sends a notification to a third network function.

In an embodiment, the first entity selects a QoS policy in the alternative QoS based on an association relationship between service flows, and/or a time delay difference between the service flows.

In an embodiment, the first entity receives the second policy in the case that a session is established and/or a session is updated.

In an embodiment, the first entity is one or more of: an access network, a terminal, a base station, or an access and mobility management function (AMF).

In an embodiment, the third network function is one or a combination of: a PCF, an AMF, an SMF, or an AF.

The present disclosure provides in an embodiment a method for policy control, including: receiving a third policy by a second entity, in which the third policy is sent directly or indirectly by a first network function.

In an embodiment, the third policy is configured for multi-flow coordination transmission or multi-flow coordination handling.

In an embodiment, the multi-flow coordination transmission or the multi-flow coordination handling is configured to support that a plurality of service flows arrive simultaneously at a terminal and/or an application server and/or a base station, or maintain that a plurality of service flows arrive at a terminal and/or an application server and/or a base station with a constant time delay difference, or ensure that a plurality of service flows arrive at a terminal and/or an application server and/or a base station within a required time delay difference.

In an embodiment, the third policy is one or more of: a multi-modality flow network policy, a flow network policy, an association network policy or a coordination network policy, information for indicating a flow association relationship, a time delay, a time delay difference, a rate, or a maximum data burst volume.

In an embodiment, the second entity receives the third policy in the case that a session is established and/or a session is updated.

In an embodiment, the second entity includes one or more of: an SMF or a UPF.

The present disclosure provides in an embodiment a first network function, including: a processor, configured to read a program in a memory, and perform determining a first policy based on a first parameter; and a transceiver, configured to receive and send data under a control of the processor.

In an embodiment, the first policy is configured for multi-flow coordination transmission or multi-flow coordination handling.

In an embodiment, the first policy is one or more of: a multi-modality flow network policy, a multi-flow network policy, a multi-flow packet network policy, a multi-flow coordination network policy, a coordination transmission network policy, or a coordination network policy.

In an embodiment, the first policy includes information for indicating a flow association relationship, and/or information for indicating a time delay difference.

In an embodiment, the information for indicating the flow association relationship indicates that a service flow is a multi-modality flow, and/or that a service flow is a flow in a multi-modality flow, and/or that a service flow is a flow in a multi-flow packet.

In an embodiment, the time delay difference indicates an end to end time delay difference between a plurality of flows, or a radio interface time delay difference between a plurality of flows, or a network time delay difference between a plurality of flows.

In an embodiment, the first policy is determined by the first network function based on a first parameter provided by a second network function.

In an embodiment, the first parameter includes one or more of: an application requirement, a policy requirement, an terminal ID, a terminal address, an application function identifier, a flow description, a QoS requirement, an alternative QoS, a flow time delay requirement, a flow time delay, a time delay difference between a plurality of flows, a service flow rate, a maximum data burst volume, an association ID, a bandwidth, or a delay difference.

In an embodiment, the first network function is one or more of: a PCF, an NEF, a RAN, an NG-RAN, or a base station.

In an embodiment, the multi-flow coordination transmission or the multi-flow coordination handling is configured to support that a plurality of service flows arrive simultaneously at a terminal and/or an application server and/or a base station and/or a UPF, or maintain that a plurality of service flows arrive at a terminal and/or an application server and/or a base station and/or a UPF with a constant time delay difference, or ensure that a plurality of service flows arrive at a terminal or an application server or a base station or a UPF within a required time delay difference.

In an embodiment, the second network function is one or a combination of: an AF, an NEF, a third-party server, or an SMF.

In an embodiment, in the case that information for indicating a time delay difference does not satisfy a flow time delay requirement, the first network function sends a first notification to a fourth network function, and the fourth network function adjusts an application layer.

In an embodiment, in the case that information for indicating a time delay difference does not satisfy a flow time delay requirement, the first network function performs adjustment based on a first rule.

In an embodiment, the first rule is PCC rules.

In an embodiment, the fourth network function is at least one of: an AF, an edge application, an edge application server, an edge application platform, or an NEF.

In an embodiment, the first notification includes at least one of: a flow time delay, a time delay difference, a delay difference, an inter-flow time delay difference, or a time delay difference policy.

The present disclosure provides in an embodiment a first network function, including: a first network function policy module, configured to determine a first policy based on a first parameter.

In an embodiment, the first network function policy module is further configured to determine a first policy configured for multi-flow coordination transmission or multi-flow coordination handling.

In an embodiment, the first policy is one or more of: a multi-modality flow network policy, a multi-flow network policy, a multi-flow packet network policy, a multi-flow coordination network policy, a coordination transmission network policy, or a coordination network policy.

In an embodiment, the first network function policy module is further configured to determine a first policy including information for indicating a flow association relationship and/or information for indicating a time delay difference.

In an embodiment, the first network function policy module is further configured to determine that the information for indicating the flow association relationship indicates that a service flow is a multi-modality flow, and/or that a service flow is a flow in a multi-modality flow, and/or that a service flow is a flow in a multi-flow packet.

In an embodiment, the first network function policy module is further configured to determine the time delay difference indicating an end to end time delay difference between a plurality of flows, or a radio interface time delay difference between a plurality of flows, or a network time delay difference between a plurality of flows.

In an embodiment, the first network function policy module is further configured to determine the first policy based on a first parameter provided by a second network function.

In an embodiment, the first network function policy module is further configured to determine the first policy based on the first parameter including one or more of: an application requirement, a policy requirement, an terminal ID, a terminal address, an application function identifier, a flow description, a QoS requirement, an alternative QoS, a flow time delay requirement, a flow time delay, a time delay difference between a plurality of flows, a service flow rate, a maximum data burst volume, an association ID, a bandwidth, or a delay difference.

In an embodiment, the first network function is one or more of: a PCF, an NEF, a RAN, an NG-RAN, or a base station.

In an embodiment, the multi-flow coordination transmission or the multi-flow coordination handling is configured to support that a plurality of service flows arrive simultaneously at a terminal and/or an application server and/or a base station and/or a user plane function (UPF), or maintain that a plurality of service flows arrive at a terminal and/or an application server and/or a base station and/or a UPF with a constant time delay difference, or ensure that a plurality of service flows arrive at a terminal or an application server or a base station or a UPF within a required time delay difference.

In an embodiment, the second network function is one or a combination of: an AF, an NEF, a third-party server, or an SMF.

In an embodiment, the first network function policy module is further configured to determine, in the case that information for indicating a time delay difference does not satisfy a flow time delay requirement, that the first network function sends a first notification to a fourth network function, and the fourth network function adjusts an application layer.

In an embodiment, in the case that the information for indicating a time delay difference does not satisfy a flow time delay requirement, the first network function performs adjustment based on a first rule.

In an embodiment, the first rule is PCC rules.

In an embodiment, the fourth network function is at least one of: an AF, an edge application, an edge application server, an edge application platform, or an NEF.

In an embodiment, the first network function policy module is further configured to send a first notification including at least one of: a flow time delay, a time delay difference, a delay difference, an inter-flow time delay difference, or a time delay difference policy.

The present disclosure provides in an embodiment a first entity, including: a processor, configured to read a program in a memory, and perform receiving a second policy, sent directly or indirectly by a first network function; and a transceiver, configured to receive and send data under a control of the processor.

In an embodiment, the second policy is configured for multi-flow coordination transmission or multi-flow coordination handling.

In an embodiment, the second policy includes one or more of: a multi-modality flow network policy, a multi-flow packet network policy, a flow network policy, an association network policy or a coordination network policy, information for indicating a flow association relationship, a time delay, a time delay difference, a rate, a maximum data burst volume, an alternative quality of service (QoS), or a jitter requirement.

In an embodiment, the jitter requirement is a radio interface jitter requirement for a base station or an end to end jitter requirement for a base station.

In an embodiment, the multi-flow coordination transmission or the multi-flow coordination handling is configured to support that a plurality of service flows arrive simultaneously at a terminal and/or an application server and/or a base station, or maintain that a plurality of service flows arrive at a terminal and/or an application server and/or a base station with a constant time delay difference, or ensure that a plurality of service flows arrive at a terminal and/or an application server and/or a base station within a required time delay difference.

In an embodiment, in the case that the alternative QoS is used in an insufficient or congested network resource, the first entity selects a suitable QoS policy in the alternative QoS.

In an embodiment, the first entity selects the suitable QoS policy in the alternative QoS and sends a notification to a third network function.

In an embodiment, the first entity selects a QoS policy in the alternative QoS based on an association relationship between service flows, and/or a time delay difference between the service flows.

In an embodiment, the first entity receives the second policy in the case that a session is established and/or a session is updated.

In an embodiment, the first entity is one or more of: an access network, a terminal, a base station, or an AMF.

In an embodiment, the third network function is one or a combination of: a PCF, an AMF, an SMF, or an AF.

The present disclosure provides in an embodiment a first entity, including: a first entity receiving module, configured to receive a second policy, sent directly or indirectly by a first network function.

In an embodiment, the first entity receiving module is further configured to receive a second policy configured for multi-flow coordination transmission or multi-flow coordination handling.

In an embodiment, the first entity receiving module is further configured to receive a second policy including one or more of: a multi-modality flow network policy, a multi-flow packet network policy, a flow network policy, an association network policy or a coordination network policy, information for indicating a flow association relationship, a time delay, a time delay difference, a rate, a maximum data burst volume, an alternative QoS, or a jitter requirement.

In an embodiment, the jitter requirement is a radio interface jitter requirement for a base station or an end to end jitter requirement for a base station.

In an embodiment, the multi-flow coordination transmission or the multi-flow coordination handling is configured to support that a plurality of service flows arrive simultaneously at a terminal and/or an application server and/or a base station, or maintain that a plurality of service flows arrive at a terminal and/or an application server and/or a base station with a constant time delay difference, or ensure that a plurality of service flows arrive at a terminal and/or an application server and/or a base station within a required time delay difference.

In an embodiment, the first entity receiving module is further configured to, in the case that the alternative QoS is used in an insufficient or congested network resource, select a suitable QoS policy in the alternative QoS.

In an embodiment, the first entity receiving module is further configured to select the suitable QoS policy in the alternative QoS and send a notification to a third network function.

In an embodiment, the first entity receiving module is further configured to select a QoS policy in the alternative QoS based on an association relationship between service flows, and/or a time delay difference between the service flows.

In an embodiment, the first entity receiving module is further configured to receive the second policy in the case that a session is established and/or a session is updated.

In an embodiment, the first entity is one or more of: an access network, a terminal, a base station, or an AMF.

In an embodiment, the third network function is one or a combination of: a PCF, an AMF, an SMF, or an AF.

The present disclosure provides in an embodiment a second entity, including: a processor, configured to read a program in a memory, and perform receiving a third policy, sent directly or indirectly by a first network function; and a transceiver, configured to receive and send data under a control of the processor.

In an embodiment, the third policy is configured for multi-flow coordination transmission or multi-flow coordination handling.

In an embodiment, the multi-flow coordination transmission or the multi-flow coordination handling is configured to support that a plurality of service flows arrive simultaneously at a terminal and/or an application server and/or a base station, or maintain that a plurality of service flows arrive at a terminal and/or an application server and/or a base station with a constant time delay difference, or ensure that a plurality of service flows arrive at a terminal and/or an application server and/or a base station within a required time delay difference.

In an embodiment, the third policy includes one or more of: a multi-modality flow network policy, a flow network policy, an association network policy or a coordination network policy, information for indicating a flow association relationship, a time delay, a time delay difference, a rate, or a maximum data burst volume.

In an embodiment, the second entity receives the third policy in the case that a session is established and/or a session is updated.

In an embodiment, the second entity includes one or more of: an SMF or a UPF.

The present disclosure provides in an embodiment a second entity, including: a second entity receiving module, configured to receive a second policy, sent directly or indirectly by a first network function.

In an embodiment, the second entity receiving module is further configured to receive a third policy configured for multi-flow coordination transmission or multi-flow coordination handling.

In an embodiment, the multi-flow coordination transmission or the multi-flow coordination handling is configured to support that a plurality of service flows arrive simultaneously at a terminal and/or an application server and/or a base station, or maintain that a plurality of service flows arrive at a terminal and/or an application server and/or a base station with a constant time delay difference, or ensure that a plurality of service flows arrive at a terminal and/or an application server and/or a base station within a required time delay difference.

In an embodiment, the second entity receiving module is further configured to receive a third policy including one or more of: a multi-modality flow network policy, a flow network policy, an association network policy or a coordination network policy, information for indicating a flow association relationship, a time delay, a time delay difference, a rate, or a maximum data burst volume.

In an embodiment, the second entity receives the third policy in the case that a session is established and/or a session is updated.

In an embodiment, the second entity includes one or more of: an SMF or a UPF.

The present disclosure provides in an embodiment a method for adjusting a QoS, including: determining PCC rules by a first network function based on a first parameter including a parameter of correlation flows.

In an embodiment, the first parameter further includes one or a combination of: a terminal address, an application function identifier, a flow description, a QoS reference, or an alternative QoS.

In an embodiment, the correlation flows are flows in one same packet.

In an embodiment, the parameter of the correlation flows includes a correlation QoS flow ID and/or an alternative QoS.

In an embodiment, the PCC rules include: a QoS of the correlation flows and an alternative QoS of the correlation flows.

In an embodiment, the PCC rules include: an association relationship between a QoS of the correlation flows and an alternative QoS of the correlation flows.

In an embodiment, the method further includes: receiving, by a first network function, a first parameter sent directly or indirectly by a second network function.

In an embodiment, the first network function is one or a combination of: a PCF, an NEF, or a RAN.

In an embodiment, the second network function is one or a combination of: an AF, an NEF, a third-party server, or an SMF.

In an embodiment, the method further includes: sending, by the first network function, the PCC rules directly or indirectly to a first entity.

In an embodiment, the PCC rules are configured for adjusting a QoS flow by the first entity.

The present disclosure provides in an embodiment a method for adjusting a QoS, including: sending, by a second network function, a first parameter directly or indirectly to a first network function, for determination of PCC rules by the first network function based on the first parameter including a parameter of correlation flows.

In an embodiment, the first parameter further includes one or a combination of: a terminal address, an application function identifier, a flow description, a QoS reference, or an alternative QoS.

In an embodiment, the correlation flows are flows in one same packet.

In an embodiments, the parameter of the correlation flows includes a correlation QoS flow ID and/or an alternative QoS.

The present disclosure provides in an embodiment a method for adjusting a QoS, including: adjusting, by a first entity, a QoS of a QoS flow based on PCC rules sent directly or indirectly by a first network function.

In an embodiment, the PCC rules include: a QoS of the correlation flows and an alternative QoS of the correlation flows.

In an embodiment, the PCC rules include: an association relationship between a QoS of the correlation flows and an alternative QoS of the correlation flows.

In an embodiment, adjusting a QoS of a QoS flow includes: selecting a suitable alternative QoS for the QoS flow with consideration of a current state of a correlation QoS flow.

The present disclosure provides in an embodiment a first network function, including: a processor, configured to read a program in a memory, and perform determining PCC rules based on a first parameter including a parameter of correlation flows; and a transceiver, configured to receive and send data under a control of the processor.

In an embodiment, the correlation flows are flows in one same packet.

In an embodiment, the parameter of the correlation flows includes a correlation QoS flow ID and/or an alternative QoS.

In an embodiment, the PCC rules include: a QoS of the correlation flows and an alternative QoS of the correlation flows.

In an embodiment, the PCC rules include: an association relationship between a QoS of the correlation flows and an alternative QoS of the correlation flows.

In an embodiment, the processor is further configured to perform receiving a first parameter sent directly or indirectly by a second network function.

In an embodiment, the first network function is one or a combination of: a PCF, an NEF, or a RAN.

In an embodiment, the second network function is one or a combination of: an AF, an NEF, a third-party server, or an SMF.

In an embodiment, the processor is further configured to perform sending the PCC rules directly or indirectly to a first entity.

In an embodiment, the PCC rules are configured for adjusting a QoS flow by the first entity.

The present disclosure provides in an embodiment a first network function, including: a first network function adjusting module, configured to determine PCC rules based on a first parameter including a parameter of correlation flows.

In an embodiment, the first network function adjusting module is further configured to determine that the correlation flows are flows in one same packet.

In an embodiment, the first network function adjusting module is further configured to determine that the parameter of the correlation flows includes a correlation QoS flow ID and/or an alternative QoS.

In an embodiment, the first network function adjusting module is further configured to determine that the PCC rules include a QoS of the correlation flows and an alternative QoS of the correlation flows.

In an embodiment, the first network function adjusting module is further configured to determine that the PCC rules include an association relationship between a QoS of the correlation flows and an alternative QoS of the correlation flows.

In an embodiment, the first network function further includes: a first network function receiving module, configured to receive a first parameter sent directly or indirectly by a second network function.

In an embodiment, the first network function is one or a combination of: a PCF, an NEF, or a RAN.

In an embodiment, the second network function is one or a combination of: an AF, an NEF, a third-party server, or an SMF.

In an embodiment, the first network function further includes: a first network function sending module, configured to send the PCC rules directly or indirectly to the first entity.

In an embodiment, the first network function sending module is further configured to send the PCC rules for adjusting a QoS flow by the first entity.

The present disclosure provides in an embodiment a second network function, including: a processor, configured to read a program in a memory, and perform sending a first parameter directly or indirectly to a first network function, for determination of PCC rules by the first network function based on the first parameter including a parameter of correlation flows; and a transceiver, configured to receive and send data under a control of the processor.

In an embodiment, the first parameter further includes one or a combination of: a terminal address, an application function identifier, a flow description, a QoS reference, or an alternative QoS.

In an embodiment, the correlation flows are flows in one same packet.

In an embodiment, the parameter of the correlation flows includes a correlation QoS flow ID and/or an alternative QoS.

The present disclosure provides in an embodiment a second network function, including: a second network function sending module, configured to send a first parameter directly or indirectly to a first network function, for determination of PCC rules by the first network function based on the first parameter, in which the second network function sending module is further configured to send the first parameter including a parameter of correlation flows.

In an embodiment, the second network function sending module is further configured to send the first parameter further including one or a combination of: a terminal address, an application function identifier, a flow description, a QoS reference, or an alternative QoS.

In an embodiment, the second network function sending module is further configured to send correlation flows being flows in one same packet.

In an embodiment, the second network function sending module is further configured to send the parameter of the correlation flows including a correlation QoS flow ID and/or an alternative QoS.

The present disclosure provides in an embodiment a first entity, including: a processor, configured to read a program in a memory, and perform adjusting a QoS of a QoS flow based on PCC rules sent directly or indirectly by a first network function; and a transceiver, configured to receive and send data under a control of the processor.

In an embodiment, the PCC rules include: a QoS of the correlation flows and an alternative QoS of the correlation flows.

In an embodiment, the PCC rules include: an association relationship between a QoS of the correlation flows and an alternative QoS of the correlation flows.

In an embodiment, the processor is configured to perform adjusting a QoS of a QoS flow by: selecting a suitable alternative QoS for the QoS flow with consideration of a current state of a correlation QoS flow.

The present disclosure provides in an embodiment a first entity, including a first entity adjusting module, configured to adjust a QoS of a QoS flow based on PCC rules sent directly or indirectly by a first network function.

In an embodiment, the first entity adjusting module is further configured to determine the PCC rules including: a QoS of the correlation flows and an alternative QoS of the correlation flows.

In an embodiment, the first entity adjusting module is further configured to determine the PCC rules including: an association relationship between a QoS of the correlation flows and an alternative QoS of the correlation flows.

In an embodiment, the first entity adjusting module is further configured to adjust a QoS of a QoS flow by selecting a suitable alternative QoS for the QoS flow with consideration of a current state of a correlation QoS flow.

The present disclosure provides in an embodiment a computer-readable storage medium having stored a computer program that, when executed by a processor, implements the method for adjusting a QoS on the first network function side, the method for adjusting a QoS on the second network function side, or the method for adjusting a QoS on the third network function side.

Embodiments of the present disclosure bring about the following beneficial effects.

According to embodiments of the present disclosure, the first network function determines the first policy based on the first parameter, thus overcoming the deficiency in the related art where an adjustment of a QoS for a single flow is only considered.

According to further embodiments of the present disclosure, the first network function determines the PCC rules based on the first parameter including the parameter of correlation flows, rather than adjusting the single QoS flow alone, thus overcoming the deficiency in the related art where the adjustment of the QoS for the single flow is only considered.

According to further embodiments of the present disclosure, because a concept of an association QoS flow ID (QFI) packet is introduced, after receiving the QoS adjusting request provided by the third network function through the second network function, the first network function adjusts the parameter of respective QoS flows in an association QoS flow packet, rather than adjusting the single QoS flow alone, thus avoiding the single QoS flow within the packet from being adjusted alone, thereby overcoming the deficiency in the related art where the adjustment of the QoS for the single flow is only considered.

Further, a haptic communication and a multimedia enhanced communication usually involve multiple service flow types, e.g., a video, audio, haptic, and kinesthetic signal, which require mutual cooperation, instead of existing separately, for complete and excellent experience for users. In embodiments of the present disclosure, the QoS of a certain service flow will be downgraded, if the NG-RAN is unable to satisfy requirement for the QoS of said service flow. In the haptic communication and the multimedia enhanced communication, the greatly downgraded QoS of a certain service may affect the whole service. For example, a severely blurred picture will be given if kinesthetic signal transmission is normal, whereas the video flow is downgraded greatly, resulting in a difficulty in accurately determining how to operate the device by eyes. Therefore, according to embodiments of the present disclosure, it is enabled to comprehensively considerate respective QoS flows of one same service for adjusting the service during the QoS adjustment, thereby guaranteeing overall service experience for users.

### BRIEF DESCRIPTION OF THE DRAWINGS

The drawings described herein are used to provide a further understanding of the present disclosure to constitute a part of the present disclosure, and the illustrative embodiments of the present disclosure and the description thereof are used to explain the present disclosure, and do not constitute an incorrect limitation of the present disclosure.
FIG. 1 is a flowchart illustrating an embodiment of a method for policy control performed by a first network function in an embodiment of the present disclosure;
FIG. 2 is a flowchart illustrating an embodiment of a method for policy control performed by a first entity in an embodiment of the present disclosure;
FIG. 3 is a flowchart illustrating an embodiment of a method for policy control performed by a second entity in an embodiment of the present disclosure;
FIG. 4 is a diagram illustrating a process of providing an association quality of service (QoS) policy by an application function (AF) in an embodiment of the present disclosure;
FIG. 5 is a diagram illustrating a process of policy control in an embodiment of the present disclosure;
FIG. 6 is another diagram illustrating a process of policy control in an embodiment of the present;
FIG. 7 is a block diagram illustrating an architecture of a first network function in an embodiment of the present disclosure;
FIG. 8 is a block diagram illustrating an architecture of a first entity in an embodiment of the present disclosure;
FIG. 9 is a block diagram illustrating an architecture of a second entity in an embodiment of the present disclosure;
FIG. 10 is a block diagram illustrating an architecture of a first network function in an embodiment of the present disclosure;
FIG. 11 is a block diagram illustrating an architecture of a second network function in an embodiment of the present disclosure;
FIG. 12 is a block diagram illustrating an architecture of a first entity in an embodiment of the present disclosure.

### DETAILED DESCRIPTION

The inventors has noticed in the course of making the invention that: it is only considered in the related art an adjustment of a quality of service (QoS) for a single flow. However, a haptic communication and a multimedia enhanced communication usually involve multiple types of service flows, e.g., a video, audio, haptic, and kinesthetic signal, which require mutual cooperation, instead of existing separately, for complete and excellent experience for users. In embodiments of the present disclosure, the QoS of a certain service flow will be downgraded, if the NG-RAN is unable to satisfy requirement for the QoS of said service flow. In the haptic communication and the multimedia enhanced communication, the greatly downgraded QoS of a certain service may affect the whole service. For example, a severely blurred picture will be given if kinesthetic signal transmission is normal, whereas the video flow is downgraded greatly, resulting in a difficulty in accurately determining how to operate the device by eyes. Therefore, it is required to comprehensively considerate respective QoS flows of one same service for adjusting the service during QoS adjustment, thereby guaranteeing overall service experience for users.

In embodiments of the present disclosure, the "correlation flows" may refer to flows with a certain correlation. The correlation here may be set depending on an actual situation accordingly. For example, the QoSs of several flows are adjusted with a certain association, so that the QoSs of respective flows are not changed independently, i.e., a changed QoS of one flow may affect a change of the QoS of another flow correlated. The "correlation flows" used herein may be also referred to as "association flows" sometime, and the "correlation" may be also referred to as "association", "correlation relationship", or "association relationship", and so on.

In view of the above, directing to the haptic communication and the multimedia enhanced communication requiring multi-flow cooperation, the present disclosure provides in embodiments a cooperative QoS adjustment scheme for different types of QoS flows, guaranteeing respective QoSs between multiple service flows for overall service experience, thus avoiding a certain QoS flow from being downgraded severely where the overall service experience cannot be guaranteed for users.

Specific embodiment of the present disclosure are described below with reference to the accompanying drawings.

In the description, respective embodiments are illustrated in a way by performing by a first network function, a second network function and a first entity separately, and examples are further given for conjunctive implementation of the respective embodiments to better understand implementation of the respective embodiments of the present disclosure. Such illustrations do not mean that they must be implemented in conjunction, or must be implemented separately, in fact, when they are implemented separately, they each solve the problem on its own side, and better technical effects can be achieved when they are used in conjunction.

For ease of understanding, implementation of the following network functions will be illustrated in specific embodiments.

A first network function is a policy control function (PCF), a network exposure function (NEF), a radio access network (RAN) or a base station.

A second network function is an application function (AF), an NEF, a third-party server or a session management function (SMF).

A third network function is a PCF, an access and mobility management function (AMF), an SMF, or an AF.

A first entity is a radio access network (RAN), a user equipment (UE), a base station, or an AMF.

A second entity is an SMF or a user plane function (UPF).

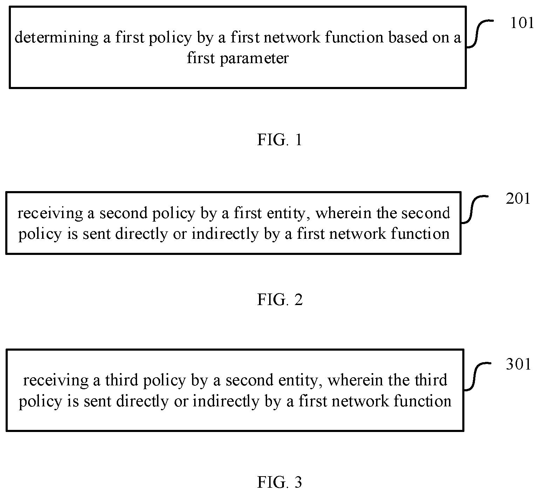

FIG. 1 is a flowchart illustrating an embodiment of a method for policy control performed by a first network function. As shown in FIG. 1, the method may include the following step 101.

At step 101, a first policy is determined by a first network function based on a first parameter.

In specific implementation, the wording "determine" in embodiments may include the following two cases. In one case, the first network function generates (or creates) policy and charging control (PCC) rules based on the first parameter if no PCC rules are available at the moment. In another case, the first network function updates the PCC rules based on the first parameter if the PCC rules are available at the moment.

This approach is to implement multi-flow coordination transmission, e.g., supporting that a plurality of service flows arrive simultaneously at a terminal/an application server/a RAN, or maintaining that a plurality of service flows arrive at a terminal/an application server/a RAN with a constant time delay difference, or ensuring that a plurality of service flows arrive at the terminal/an application server/a RAN within a required time delay difference.

In an embodiment, the first policy is configured for multi-flow coordination transmission or multi-flow coordination handling. The multi-flow coordination transmission or the multi-flow coordination handling is configured to illustrate a name of the policy.

In an embodiment, the first policy may be one or more of: a multi-modality flow network policy, a multi-flow network policy, a multi-flow packet network policy, a multi-flow coordination network policy, a coordination transmission network policy, or a coordination network policy, for illustrating one or more parameters in the policy.

In specific, the first policy may be a coordination QoS policy, a coordination policy, a multi-modality coordination handling, a multi-modality correlation policy, a multi-modality correlation, a QoS Policy, a QoS rule, a QoS profile, an alternative QoS, a coordination handling, PCC rules, a QoS profile, QoS enforcement rules (QER), a packet detection rule (PDR), QoS rules, a QoS parameter.

In an embodiment, the first policy includes one or more of: information for indicating a flow association relationship, and/or information for indicating a time delay difference.

In specific, the first policy may include one or more of: a multi-modality flow network policy, a multi-flow packet network policy, a flow network policy, an association network policy, or a coordination network policy.

The information for indicating the flow association relationship may be a flow association relationship.

The information for indicating a time delay difference may be a delay difference, which may be obtained by the following. First, the 5^{th} Generation (5G) mobile communication system measures an end to end time delay through the mechanism of QoS monitoring, obtains separate transmission time delays of individual flows, and reports the same to the PCF which calculates a time delay difference of a target flow. Second, for a downlink message, one or more application servers or UPFs add a tag or a timestamp to a message header (based on a segment routing IPv6 (SRv6) extension header or an internet protocol (IP) extension header or a general packet radio service tunnelling protocol for user plane(GTP-U) extension header) when sending a message. After receiving the message, a terminal may calculate, by reading timestamps of the two flows or recognizing tags of the two flows, a transmission time delay difference between two flows, reports the same to the 5G core network. For an uplink message, when the sending the message, the terminal adds a tag or a timestamp to a message header (e.g., a SRv6 extension header or an IP extension header). After receiving the message, the UPF may calculate a transmission time delay difference between two flows by reading timestamps of the two flows or recognizing tags of the two flows. The UPF or the RAN may implement message cache based on the tags or the timestamps to realize alignment of the message.

In an embodiment, the information for indicating the flow association relationship indicates that a service flow is a multi-modality flow, and/or that a service flow is a flow in a multi-modality flow, and/or that a service flow is a flow in a multi-flow packet.

In an embodiment, the time delay difference indicates an end to end time delay difference between a plurality of flows, or a radio interface time delay difference between a plurality of flows, or a network time delay difference between a plurality of flows.

In specific, the information for indicating a time delay difference may be a time delay difference.

In an embodiment, the first policy is determined by the first network function based on a first parameter provided by a second network function.

In specific implementation, the wording "determine" specifically may include the following two cases. In one case, the first network function generates (or creates) PCC rules based on the first parameter if no PCC rules are available at the moment. In another case, the first network function updates the PCC rules based on the first parameter if the PCC rules are available at the moment.

In an embodiment, the first parameter includes one or more of: an application requirement, a policy requirement, an terminal identification (ID), a terminal address, an application function identifier, a flow description, a QoS requirement, an alternative QoS, a flow time delay requirement, a flow time delay, a time delay difference between a plurality of flows, a service flow rate, a maximum data burst volume, an association ID, a bandwidth, or a delay difference.

The association ID may be a correlation ID, a multi-modality flow correlation ID, a multi-modality traffic flow correlation ID, or a flow correlation ID.

The first network function may be one or more of: a PCF, an NEF, a RAN, an NG-RAN, or a base station.

In an embodiment, the multi-flow coordination transmission or the multi-flow coordination handling is configured to support that a plurality of service flows arrive simultaneously at a terminal and/or an application server and/or a base station and/or a user plane function (UPF), or maintain that a plurality of service flows arrive at a terminal and/or an application server and/or a base station and/or a UPF with a constant time delay difference, or ensure that a plurality of service flows arrive at a terminal or an application server or a base station or a UPF within a required time delay difference.

In an embodiment, the second network function is one or a combination of: an AF, an NEF, a third-party server, or an SMF.

In the case that information for indicating a time delay difference does not satisfy a flow time delay requirement, the first network function sends a first notification to a fourth network function, and the fourth network function adjusts an application layer.

In an embodiment, in the case that information for indicating a time delay difference does not satisfy a flow time delay requirement, the first network function performs adjustment based on a first rule.

In an embodiment, the first rule is PCC rules.

In specific, the information for indicating a time delay difference does not satisfy a flow time delay requirement may indicate that information indicating a delay difference is larger or smaller than the flow time delay requirement, or indicate that one of the association flows does not satisfy the time delay requirement. When the information indicating the delay difference is smaller than the flow delay requirement, the PCF adjusts the PCC rules for each flow in the association flows. For example, the PCF uses an alternative QoS profile or adjusts QoS parameter (e.g., PDB, and priority level). For flows with larger time delay, the PCF adjusts the QoS parameter e.g., by using a smaller end to end (E2E) packet delay budget (PDB) or using a high priority level. For flows with smaller time delay, the PCF adjusts the QoS parameters, e.g., by increasing the E2E PDB in the QoS parameter or by using a low priority level.

In an embodiment, the fourth network function is at least one of: an AF, an edge application, an edge application server, an edge application platform, or an NEF.

In an embodiment, the first notification includes at least one of: a flow time delay, a time delay difference, a delay difference, an inter-flow time delay difference, or a time delay difference policy.

In specific, the wording "adjust" describe above may refer to adaptation, or adaption, or policy adjustment.

In an embodiment of the present disclosure, the first network function may further receive a second notification from a first entity and update the first policy. The second notification herein may be configured for indicating one or more of: (1) information of being unable to currently guarantee a transmission of a first flow; (2) information of being unable to currently guarantee a QoS of a first flow; (3) a currently supported maximum guaranteed bit rate (GBR) of a first flow; (4) a currently supported maximum non-guaranteed bit rate (Non-GBR) of a first flow; (5) a currently supported time delay of a first flow; (6) a currently supported bandwidth of a first flow.

In specific, the first flow may be one or more flows.

As such, the first network function may update the first policy based on the second notification. In an embodiment of the present disclosure, updating the first policy may refer to adjusting (like updating or adjusting) the policy.

For example, the PCF receives a second notification sent from the RAN and updates the first policy based on the second notification.

In specific, updating the first policy may include at least one of: (1) decreasing or increasing QoS priority levels of all correlation flows; (2) decreasing or increasing QoS priority levels of part of correlation flows; (3) releasing all correlation flows; (4) releasing part of correlation flows; (5) removing a correlation of all correlation flows; (6) removing a correlation of part of correlation flows.

Said "all correlation flows" used herein may refer to all flows that have the correlation, e.g., the first flow and all other flows correlated to the first flow. The part of correlation flows may be part of the all flows that have the correlation.

In an embodiment of the present disclosure, the first policy is updated for the plurality of flows where the plurality of flows may involve a plurality of updating schemes. Taking an example of upgrade/downgrade, as shown in Table 1, a plurality of upgrade/downgrade combinations exist. The upgrade/downgrade in Table 1 each may be upgrade/degrade by one or more level or more than one level.

**Table 1**

| Flow **A** | Flow **B** | Flow **C** | ...... |
|---|---|---|---|
| upgrade | downgrade | unchanged | ... ... |
| upgrade | downgrade | downgrade | |
| upgrade | downgrade | upgrade | |
| upgrade | upgrade | unchanged | |
| upgrade | upgrade | downgrade | |
| upgrade | upgrade | upgrade | |
| upgrade | unchanged | unchanged | |
| upgrade | unchanged | downgrade | |
| upgrade | unchanged | upgrade | |
| downgrade | downgrade | unchanged | |
| downgrade | downgrade | downgrade | |
| downgrade | downgrade | upgrade | |
| downgrade | upgrade | unchanged | |
| downgrade | upgrade | downgrade | |
| downgrade | upgrade | upgrade | |
| downgrade | unchanged | unchanged | |
| downgrade | unchanged | downgrade | |
| downgrade | unchanged | upgrade | |
| unchanged | downgrade | unchanged | |
| unchanged | downgrade | downgrade | |
| unchanged | downgrade | upgrade | |
| unchanged | upgrade | unchanged | |
| unchanged | upgrade | downgrade | |
| unchanged | upgrade | upgrade | |
| unchanged | unchanged | unchanged | |
| unchanged | unchanged | downgrade | |
| unchanged | unchanged | upgrade | |

After updating the first policy, the first network function sends an updated first policy to at least one of: a first entity, a base station where correlation flows are located, an access network, an SMF, or a UPF.

FIG. 2 is a flowchart illustrating an embodiment of a method for policy control performed by a first entity. As shown in FIG. 2, the method may include the following step at 201.

At 201, a first entity receives a second policy, in which the second policy is sent directly or indirectly by a first network function.

In an embodiment, the second policy is configured for multi-flow coordination transmission or multi-flow coordination handling.

In an embodiment of the present disclosure, the second policy may be a policy that is configured for multi-flow coordination transmission or multi-flow coordination handling, or policy information that is configured for flow handling, for example may be policy information that handles a single flow, such as a QoS policy, QoS information, a QoS Profile, a GBR, a Non-GBR, a bandwidth, or a time delay, or other related information.

In an embodiment, the second policy includes one or more of: a multi-modality flow network policy, a multi-flow packet network policy, a flow network policy, an association network policy or a coordination network policy, information for indicating a flow association relationship, a time delay, a time delay difference, a rate, a maximum data burst volume, an alternative quality of service (QoS), or a jitter requirement.

In an embodiment, the jitter requirement is a radio interface jitter requirement for a base station or an end to end jitter requirement for a base station.

In an embodiment, the multi-flow coordination transmission or the multi-flow coordination handling is configured to support that a plurality of service flows arrive simultaneously at a terminal and/or an application server and/or a base station, or maintain that a plurality of service flows arrive at a terminal and/or an application server and/or a base station with a constant time delay difference, or ensure that a plurality of service flows arrive at a terminal and/or an application server and/or a base station within a required time delay difference.

In an embodiment, in the case that the alternative QoS is used in an insufficient or congested network resource, the first entity selects a suitable QoS policy in the alternative QoS. Thus, an alternative QoS may also be referred to as a candidate QoS.

In an embodiment, the first entity selects the suitable QoS policy in the alternative QoS and sends a notification to a third network function.

In an embodiment, the first entity selects a QoS policy in the alternative QoS based on an association relationship between service flows, and/or a time delay difference between the service flows.

In an embodiment, the first entity receives the second policy in the case that a session is established and/or a session is updated.

In an embodiment, the first entity may be one or more of: an access network, a terminal, a base station, or an AMF.

In an embodiment, the third network function is one or a combination of: a PCF, an AMF, an SMF, or an AF.

In an embodiment of the present disclosure, the first entity may further send a second notification to the first network function. Here, the second notification is configured for indicating one or more of: (1) information of being unable to currently guarantee a transmission of a first flow; (2) information of being unable to currently guarantee a QoS of a first flow; (3) a currently supported maximum GBR of a first flow; (4) a currently supported maximum Non-GBR of a first flow; (5) a currently supported time delay of a first flow; (6) a currently supported bandwidth of a first flow.

Optionally, the first flow may be one or more flows.

As such, the first network function may update the first policy based on the second notification and send the adjusted first policy to the first entity. The first entity may further receive the adjusted first policy sent by the first network function.

FIG. 3 is a flowchart illustrating an embodiment of a method for policy control performed by a second entity. As shown in FIG. 3, the method may include the following step at 301.

At 301, the second entity receives a third policy, in which the third policy is sent directly or indirectly by a first network function.

In an embodiment, the third policy is configured for multi-flow coordination transmission or multi-flow coordination handling.

In an embodiment, the third policy includes one or more of: a multi-modality flow network policy, a flow network policy, an association network policy or a coordination network policy, information for indicating a flow association relationship, a time delay, a time delay difference, a rate, or a maximum data burst volume.

In an embodiment, the multi-flow coordination transmission or the multi-flow coordination handling is configured to support that a plurality of service flows arrive simultaneously at a terminal and/or an application server and/or a base station, or maintain that a plurality of service flows arrive at a terminal and/or an application server and/or a base station with a constant time delay difference, or ensure that a plurality of service flows arrive at a terminal and/or an application server and/or a base station within a required time delay difference.

In an embodiment, the second entity receives the third policy in the case that a session is established and/or a session is updated.

In an embodiment, the second entity includes one or more of: an SMF or a UPF.

Provided below is a method for adjusting a QoS performed by a first network function. The method may include: determining PCC rules by a first network function based on a first parameter including a parameter of correlation flows.

In specific, the first parameter may be sent directly or indirectly by another network element such as the second network function, or may be configured directly to the first network function by another device (e.g., a network management system), or may be pre-configured to the first network function by an alternative feasible way.

In specific implementation, the wording "determine" in embodiments may include the following two cases. In one case, the first network function generates (or creates) PCC rules based on the first parameter if no PCC rules are available at the moment. In another case, the first network function updates PCC rules based on the first parameter if the PCC rules are available at the moment.

The first parameter including the parameter of the correlation flows may be at least implemented in the following two ways.

First: in addition to the parameter of the correlation flows, the first parameter may further include another parameter, which may or may not be configured for the first network function to determine the PCC rules.

Second: the first parameter only includes the parameter of the correlation flows, i.e. the first parameter and the parameter of the correlation flows are equivalent concepts.

The "correlation flows" may refer to flows with a certain correlation. The correlation here may be set depending on an actual situation accordingly. For example, the QoSs of several flows are adjusted with a certain association, so that the QoSs of respective flows are not changed independently, i.e., a changed QoS of one flow may affect a change of the QoS of another flow correlated. The "correlation flows" used herein may be also referred to as "association flows", and the "correlation" may be also referred to as "association", "correlation relationship" or "association relationship", and so on. For example in specific, it is necessary to consider a time delay value of an video flow for setting a time delay value of the corresponding audio flow, where a difference in the time delay values between the video and audio flows should be not greater than a fixed value, thereby guaranteeing service experience for users.

It should be understood that the PCC rules determined, generated, updated by the first network function are configured to subsequently adjust one or more specified flows. As the parameter of the correlation flows is considered in the process of determining, generating or updating the PCC rules, adjusting one or more specified flows based on the obtained PCC rules allows for fully consideration of other flows correlated to one or more specified flows (e.g., the QoS of the correlation flows), thus guaranteeing the overall service experience for the user.

In an embodiment, the first parameter may further include one or a combination of: a terminal address, an application function identifier, a flow description, a QoS reference, or an alternative QoS.

In an embodiment, the correlation flows are flows in one same packet.

In specific, the correlation flows are necessarily in one same packet, however flows in one same packet may be all correlated, or partially correlated where the packet may also include another flows that is not correlated with the specified flows. Nevertheless in embodiments of the present disclosure, the parameter of the correlation flows included in the first parameter is parameter information of the flows with a certain correlation in one same packet.

In an embodiment, the parameter of the correlation flows includes a correlation QoS flow ID and/or an alternative QoS.

In specific, for example, if a flow 1, a flow 2, a flow 3, and a flow 4 in a packet are correlated, then the parameter of the correlation flows may include the correlation QoS flow ID, i.e., a QFI1 (QoS flow ID 1), a QFI2, a QFI3, and a QFI4. Accordingly, the first network function may obtain an association relationship between the flows based on the IDs.

In an optional embodiment, a first alternative QoS may be an adjusting limit between the correlation flows. For example, the time delay between the flow 1 and flow 2 cannot be greater than xx. The first alternative QoS may describe an adjusting limit between all flows or partial flows in the correlation flows.

In an embodiment, an alternative QoS may be a parameter in the parameter of the correlation flows, or may be a parameter in the first parameter.

Of course, the name "alternative QoS" in embodiments is merely one example listed in the present disclosure, which in practice may be referred to as alternative name by the person skilled in the art, e.g., "first information", that is, the parameter of the correlation flows includes a correlation QoS flow ID and/or first information.

In an embodiment, the PCC rules include: a QoS of the correlation flows and an alternative QoS of the correlation flows.

In specific, for example, if the flow 1, the flow 2, the flow 3, and the flow 4 are correlated, the PCC rules include the alternative QoS of the flow 1, and the QoSs of the flow 2, the flow 3, and the flow 4.

In an embodiment, the PCC rules include: an association relationship between a QoS of the correlation flows and an alternative QoS of the correlation flows.

In specific and furthermore, in addition to the QoS of the correlation flows and the alternative QoS of the correlation flows, the PCC rules may further include the association relationship between the both, which for example may be a correspondence relationship between the QoS of the correlation flows and the alternative QoS of the correlation flows.

In an embodiment, the method may further include: receiving, by a first network function, a first parameter sent directly or indirectly by a second network function.

In an embodiment, the first network function is one or a combination of: a PCF, an NEF, or a RAN.

In an embodiment, the second network function is one or a combination of: an AF, an NEF, a third-party server, or an SMF.

In an embodiment, the method may further include: sending the PCC rules directly or indirectly to a first entity by the first network function.

In an embodiment, the PCC rules are configured to adjust a QoS flow by the first entity.

Provided below is a method for adjusting a QoS performed by a second network function. The method may include: sending, by a second network function, a first parameter directly or indirectly to a first network function, for determination of PCC rules by the first network function based on the first parameter including a parameters of correlation flows.

In an embodiment, the first parameter further includes one or a combination of: a terminal address, an application function identifier, a flow description, a QoS reference, or an alternative QoS.

In an embodiment, the correlation flows are flows in one same packet.

In an embodiment, the parameter of the correlation flows includes a correlation QoS flow ID and/or an alternative QoS.

Provided below is a method for policy control performed by a first entity. The method may include: receiving, by a first entity, a second policy sent directly or indirectly by a first network function.

In an embodiment, the second policy is configured for multi-flow coordination transmission or multi-flow coordination handling.

In an embodiment, the second policy includes one or more of: a multi-modality flow network policy, a flow network policy, an association network policy or a coordination network policy, information for indicating a flow association relationship, a time delay, a time delay difference, a rate, a maximum data burst volume, an alternative QoS, or a jitter requirement.

In an embodiment, the jitter requirement is a radio interface jitter requirement for a base station.

In an embodiment, the multi-flow coordination transmission or the multi-flow coordination handling is configured to support that a plurality of service flows arrive simultaneously at a terminal and/or an application server and/or a base station, or maintain that a plurality of service flows arrive at a terminal and/or an application server and/or a base station with a constant time delay difference, or ensure that a plurality of service flows arrive at a terminal and/or an application server and/or a base station within a required time delay difference.

In an embodiment, in the case that the alternative QoS is used in an insufficient or congested network resource, the first entity may select a suitable QoS policy in the alternative QoS.

In an embodiment, the first entity selects the suitable QoS policy in the alternative QoS and sends a notification to a third network function, e.g., a PCF, an AMF, an SMF, or an AF.

In an embodiment, the first entity selects a suitable QoS policy in the alternative QoS based on an association relationship between service flows, and/or a time delay difference between the service flows.

In an embodiment, the first entity receives the second policy in the case that a session is established and/or a session is updated.

In an embodiment, the first entity is one or more of: a RAN, a UE, a base station, or an AMF.

In an embodiment, the third network function is one or a combination of: a PCF, an AMF, an SMF, or an AF.

Provided below is a method for adjusting a QoS performed by a first entity. The method may include: adjusting, by the first entity, a QoS of a QoS flow based on PCC rules sent directly or indirectly by a first network function.

In specific embodiments, the PCC rules are the PCC rules that are received directly or indirectly by the first entity from the core network (e.g., PCF/SMF/AMF). It should be noted that the "PCC rules" on the first entity are not necessarily also called as the "PCC rules", i.e., the 'PCC rules' may be called by a different name on the first entity.

In an embodiment, the PCC rules include: a QoS of the correlation flows and an alternative QoS of the correlation flows.

In an embodiment, the PCC rules include: an association relationship between a QoS of the correlation flows and an alternative QoS of the correlation flows.

In an embodiment, adjusting the QoS of the QoS flow includes: selecting a suitable alternative QoS for the QoS flow with consideration of a current state of a correlation QoS flow.

In specific, the alternative QoS may be upgrade or downgrade of the QoS level.

In embodiments, with a concept of an association QoS flow ID (QFI) packet introduced, the QoS flows in the packet are not changed separately, but rather the QoSs are adjusted based on the situation of the current packet.

In an embodiment, adjusting the QoS may refer to operations such as updating, supplementing, and deleting.

In specific, it may additionally introduce a table indicating the relationship between QFIs, allowing for determining that a QoS of a certain QoS flow is to be upgraded/downgraded/unchanged with consideration of the AF request, the network state, the current QoS state of the association QFI, when adjusting the QoS of said certain QoS flow.

The first entity here may be a RAN. When resources cannot be guaranteed for NG-RAN, it is necessary for the QoS adjustment to consider the current state of the association QFI, i.e., a QoS of the correlation flows and an alternative QoS of the correlation flows (or an association relationship between the QoS of the correlation flows and the alternative QoS of the correlation flows) in the PCC rules sent by the PCF, and then to select a suitable alternative QoS to upgrade or downgrade the resources.

In an embodiment, the parameter includes one or a combination of: a terminal address, an application function identifier, a flow description, a QoS reference, a correlation QoS flow ID or an alternative QoS.

In specific, the AF provides the NEF with an association QoS parameter, including a UE address, an AF identifier, a flow description, a QoS reference, a related QFI, and an alternative QoS. The NEF in turn sends the association QoS parameter to the PCF. Further, the PCF uses the parameter (i.e., a related QFI, an alternative QoS) provided by the AF through the NEF to cover the original QoS parameter.

In an embodiment, the method may further include: authorizing the second network function, enabling the second network function to provide the parameter to a first network function.

In specific, the first network function authorizes the second network function whether or not to provide correlation parameters of the QoS, where no handling is performed if without authorization.

In an embodiment, the method may further include, accordingly the second network function may further include: receiving a reply, sent from the first network function, and indicated after the second network function provides the parameter, a reply after the second network function is indicated to provide the parameter.

In specific, the first network function sends a reply of providing the parameter to the second network function, and indicates a result of the request.

In an embodiment, the method may further include: subscribing, to the first network function, a notification of a resource allocation state of the first network function.

In an embodiment, a parameter of a QoS flow, and/or an association policy of a packet, are(is) adjusted based on a predefined table including relationships of respective QoS flows in a QoS flow packet, and/or a preset association strategy, and/or parameters of respective QoS flows to be adjusted under the corresponding conditions.

In an embodiment, adjusting based on the predefined table includes: determining other QoS flows in one same packet when a QoS adjustment is performed on a parameter of one QoS flow; determining a current state of a parameter for QoS flows of each packet; determining, based on the current state of the parameter for QoS flows of each packet, an available QoS adjusting policy of said QoS flow by the predefined table; adjusting a parameter of the QoS flow after selecting an adjustment policy from the available QoS adjusting policy based on a preset rule.

Provided below is a method for policy control performed by a second entity. The method may include: receiving, by the second entity, a third policy sent directly or indirectly by a first network function.

In an embodiment, the third policy is configured for multi-flow coordination transmission or multi-flow coordination handling.

In an embodiment, the third policy may include one or more of: a multi-modality flow network policy, a flow network policy, an association network policy or a coordination network policy, information for indicating a flow association relationship, a time delay, a time delay difference, a rate, or a maximum data burst volume.

In an embodiment, the multi-flow coordination transmission or the multi-flow coordination handling is configured to support that a plurality of service flows arrive simultaneously at a terminal and/or an application server and/or a base station, or maintain that a plurality of service flows arrive at a terminal and/or an application server and/or a base station with a constant time delay difference, or ensure that a plurality of service flows arrive at a terminal and/or an application server and/or a base station within a required time delay difference.

In an embodiment, the second entity receives the third policy in the case that a session is established and/or a session is updated.

In an embodiment, the second entity includes one or more of: an SMF or a UPF.

The following are illustrated with reference of examples.

### Example 1

In this example, illustration is made where an AF provides an association QoS policy.

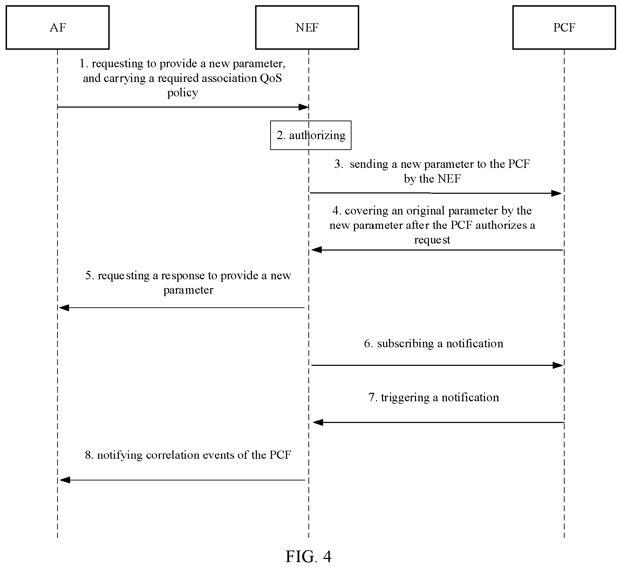

FIG. 4 is a diagram illustrating a process where an AF provides an association QoS policy. As shown in FIG. 4, the process may include the following steps.
1. The AF requests the NEF to provide a new parameter and carry a required association QoS policy.
   The AF provides the NEF with an association QoS parameter including a UE address, an AF identifier, a flow description, a QoS reference, a related QFI, and an alternative QoS.
2. The NEF makes authorization
   The NEF authorizes the AF whether or not to provide a correlation parameter of the QoS, where all steps (except step 5) are skipped if without authorization.
3. The NEF sends a new parameter to the PCF.
   The NEF sends the PCF the correlation parameter including a UE address, an AF identifier, a flow description, a QoS reference, a related QFI, and an alternative QoS.
4. An original parameter is covered by the new parameter after authorization of the PCF.
   The PCF determines whether the request is authorized or not. Upon an authorized request, the PCF uses the parameter (i.e., a related QFI, an alternative QoS) provided by the AF through the NEF to cover the original QoS parameter and return a response to the NEF.
5. The NEF returns a response of a request to provide a new parameter.
   The NEF sends the AF a reply of providing the parameter and indicates a result of the request.
6. The NEF subscribes a notification
   The NEF subscribes a notification of a resource allocation state of the PCF.
7. The PCF triggers a notification
   The PCF triggers a notification to the NEF in the case that an event is satisfied, e.g., successful or failed establishment of a transmission resource corresponding to a QoS update.
8. The NEF notifies the AF of a correlation event of the PCF.
   The NEF sends the AF a notification of a correlation event of the PCF.

### Example 2

In this example, illustration is made for an implementation of the PCC rules after introducing the association QFI.

In an embodiment, a parameter of a QoS flow and/or an association policy of a packet, are(is) adjusted based on a predefined table including relationships of respective QoS flows in a QoS flow packet, and/or a preset association strategy, and/or parameters of respective QoS flows to be adjusted under the corresponding conditions.

In an embodiment, adjusting based on the predefined table includes: determining other QoS flows in one same packet when a QoS adjustment is performed on a parameter of one QoS flow; determining a current state of a parameter for QoS flows of each packet; determining, based on the current state of a parameter for QoS flows of each packet, an available QoS adjusting policy of the QoS flow by the predefined table; adjusting a parameter of the QoS flow after selecting an adjustment policy from the available QoS adjusting policy based on a preset rule.

In specific, it may additionally introduce a table indicating the relationship between a plurality of flows. The QFIs in the table are flows in one same packet. When the QoS is adjusted for one flow, it is required for the PCF to determine how adjust the QoS of said flow (increases/decreases/maintains) by comprehensively considering a current QoS of all the flows in the packet, and an AF requirement and/or the current state of the network, thereby making a modification to change the QoS of the flow.

**QoS flow packet table**

| packet table name | QoS rules |
|---|---|
| QFI1 | PCC rules ID |
| QFI2 | |
| ... ... | |

### QoS Association policy

The serial numbers of QFIs in the table represent a current state of a parameter (including a bandwidth, an uplink and a downlink, a delay, etc.) for a QFI. The alternative QoS represents a list of available QoS adjusting policies for the QoS flow when a plurality of associated QFIs are in the current state, where each number represents a set of QoS parameters and the priority level thereof. The alternative QoS may be increased/decreased/maintained.

| QFI1 | QFI2 | QFIn | Alternative QoS |
|---|---|---|---|
| 1 | 1 | ... ... | 1, 2, 3 |
| 1 | 2 | ... ... | 2, 3, 4 |
| 1 | 3 | ... ... | 3, 4, 5 |
| 2 | 1 | ... ... | 5, 6, 7, 8 |
| 2 | 2 | ... ... | 6, 7, 8 |
| 2 | 3 | ... ... | 7, 8, 9 |
| 3 | 1 | ... ... | 7, 8, 9, 10 |
| 3 | 2 | ... ... | 6, 7, 8 |
| 3 | 3 | ... ... | 7, 8, 9, 10 |

### Example 3

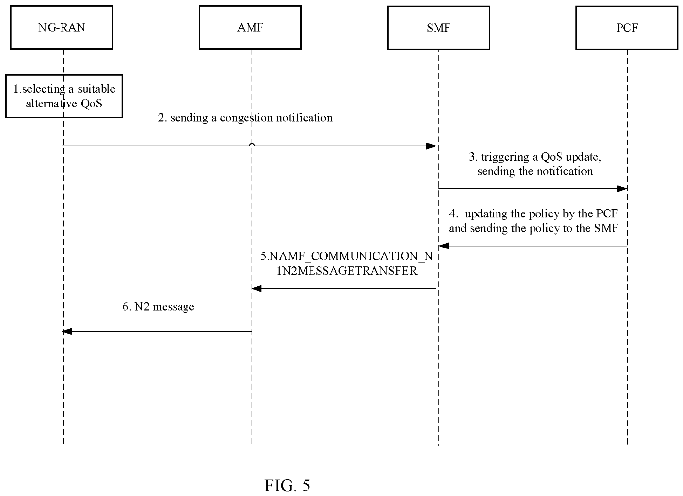

FIG. 5 is a diagram illustrating a process of policy control. As shown in FIG. 5, the process may include the following steps.
0. Congestion occurs in the NG-RAN, thus resources for the QoS flows cannot be guaranteed.
1. The NG-RAN selects the most suitable alternative QoS and executes the same based on an alternative QoS in the QoS profile of the flow and a received latency time difference.
2. If an alternative QoS that satisfies the requirement cannot be selected, the NG-RAN sends a congestion notification to the SMF, and informs the SMF that the QoS requirement of the flow cannot be satisfied, and informs the SMF with the best resources that can be allocated to the flow at the moment.
3. The SMF sends the PCF the congestion notification, which triggers a protocol data unit (PDU) session modification to update the QoS profile.
4. The PCF updates the QoS profile based on the PCC rules and information provided by the AF and sends an updated QoS profile to the SMF.
5. The SMF sends the updated QoS profile to the AMF through Namf_Communication_N1N2MessageTransfer (i.e., NAMF_COMMUNICATION_ N1N2MESSAGETRANSFER).
6. The AMF sends the QoS profile to the NG-RAN through an N2 message.

### Example 4

In this example, illustration is made where an AF provides an association QoS policy.

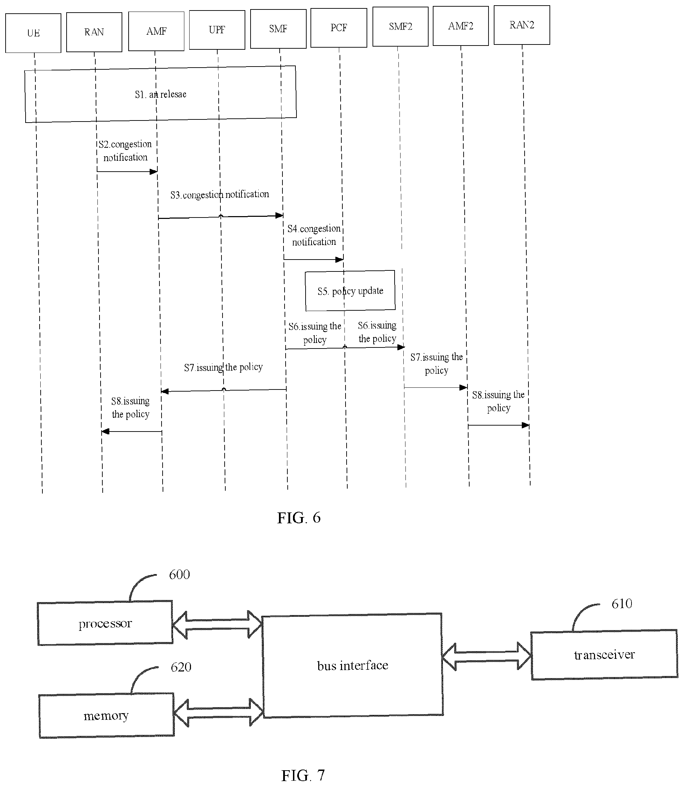

FIG. 6 shows an example illustrating a process where an AF provides an association QoS policy. As shown in FIG. 6, the process may include the following steps at S1 to S8.

At S1, when the RAN is unable to satisfy a QoS requirement of a current service flow (assumed to be a first service flow), the RAN releases the current first service flow.

At S2, the RAN sends the AMF a congestion notification for notifying that the first service flow cannot be satisfied and that the first service flow has been released.

At S3, the AMF sends the congestion notification to the SMF.

At S4, the SMF sends the congestion notification to the PCF.

At S5, the PCF performs a policy adjustment based on the first service flow and information provided by the AF. The PCF releases all or part of the flows correlated to the first service flow, upgrades or downgrades the QoSs of the first service flow and other flows correlated to the first service flow, to generate a new policy updated.

At S6, the PCF issues the new policy to a correlated SMF.

At S7, the SMF issues the new policy to a correlated AMF.

At S8, the AMF issues the new policy to a correlated RAN.

Based on a same inventive concept, the present disclosure further provides in embodiments a plurality of network functions, and a computer-readable storage medium. As the principles of these devices to solve the problems are similar to the method for adjusting a QoS, the embodiments of these devices may refer to the embodiments of the methods, and details are not described herein again.

When implementing the technical solutions provided in the embodiments of the present disclosure, the following may be implemented.

FIG. 7 is a block diagram illustrating an architecture of a first network function. As shown in FIG. 7, the first network function includes a processor 600, a transceiver 610 and a memory 620.

The processor 600 is configured to read a program in the memory 620 and perform determining a first policy based on a first parameter.

The transceiver 610 is configured to receive and send data under a control of the processor 600.

In an embodiment, the first policy is configured for multi-flow coordination transmission or multi-flow coordination handling.

In an embodiment, the first policy may be one or more of: a multi-modality flow network policy, a multi-flow network policy, a multi-flow packet network policy, a multi-flow coordination network policy, a coordination transmission network policy, or a coordination network policy.

In an embodiment, the first policy includes information for indicating a flow association relationship, and/or information for indicating a time delay difference.

In an embodiment, the information for indicating the flow association relationship indicates that a service flow is a multi-modality flow, and/or that a service flow is a flow in a multi-modality flow, and/or that a service flow is a flow in a multi-flow packet.

In an embodiment, the time delay difference indicates an end to end time delay difference between a plurality of flows, or a radio interface time delay difference between a plurality of flows, or a network time delay difference between a plurality of flows.

In an embodiment, the first policy is determined by the first network function based on a first parameter provided by a second network function.

In an embodiment, the first parameter includes one or more of: an application requirement, a policy requirement, an terminal ID, a terminal address, an application function identifier, a flow description, a QoS requirement, an alternative QoS, a flow time delay requirement, a flow time delay, a time delay difference between a plurality of flows, a service flow rate, a maximum data burst volume, an association ID, a bandwidth, or a delay difference.

In an embodiment, the first network function is one or more of: a PCF, an NEF, a RAN, an NG-RAN, or a base station.

In an embodiment, the multi-flow coordination transmission or the multi-flow coordination handling is configured to support that a plurality of service flows arrive simultaneously at a terminal and/or an application server and/or a base station and/or a user plane function (UPF), or maintain that a plurality of service flows arrive at a terminal and/or an application server and/or a base station and/or a UPF with a constant time delay difference, or ensure that a plurality of service flows arrive at a terminal or an application server or a base station or a UPF within a required time delay difference.

In an embodiment, the second network function is one or a combination of: an AF, an NEF, a third-party server, or an SMF.

In an embodiment, in the case that information for indicating a time delay difference does not satisfy a flow time delay requirement, the first network function sends a first notification to a fourth network function, and the fourth network function adjusts an application layer.

In an embodiment, in the case that information for indicating a time delay difference does not satisfy a flow time delay requirement, the first network function performs adjustment based on a first rule.

In an embodiment, the first rule is PCC rules.

In an embodiment, the fourth network function is at least one of: an AF, an edge application, an edge application server, an edge application platform, or an NEF.

In an embodiment, the first notification includes at least one of: a flow time delay, a time delay difference, a delay difference, an inter-flow time delay difference, or a time delay difference policy.

A flow time delay, a time delay difference, a delay difference, an inter-flow time delay difference, or a time delay difference policy.

Optionally, the transceiver 610 is further configured to receive a second notification from a first entity.

The processor 600 is further configured to update the first policy based on the first notification.

Optionally, updating the first policy includes at least one of: decreasing or increasing QoS priority levels of all correlation flows; decreasing or increasing QoS priority levels of part of correlation flows; releasing all correlation flows; releasing part of correlation flows; removing a correlation of all correlation flows; removing a correlation of part of correlation flows.

Optionally, the transceiver 610 is further configured to send an updated first policy to at least one of: a first entity, a base station where correlation flows are located, an access network, an SMF, or a UPF.

In FIG. 7, a bus architecture may include any number of interconnected buses and bridges, which are specifically linked together by one or more processors represented by the processor 600 and various circuits of a memory represented by the memory 620. The bus architecture may also link together various other circuits, such as a peripheral device, a voltage regulator, and a power management circuit, etc., which are well known in the art, and therefore are not further described herein. A bus interface provides an interface. The transceiver 610 may be more than one element, i.e., includes a transmitter and a receiver, and provides units for communicating with other various devices on a transmission medium. The processor 600 is responsible for managing the bus architecture and general processing. The memory 620 may store data used by the processor 600 when performing operations.

The present disclosure further provides in an embodiments a first network function, including: a first network function policy module, configured to determine a first policy based on a first parameter.

In an embodiment, the first network function policy module is further configured to determine a first policy configured for multi-flow coordination transmission or multi-flow coordination handling.

In an embodiment, the first policy is one or more of: a multi-modality flow network policy, a multi-flow network policy, a multi-flow packet network policy, a multi-flow coordination network policy, a coordination transmission network policy, or a coordination network policy.

In an embodiment, the first network function policy module is further configured to determine a first policy including information for indicating a flow association relationship and/or information for indicating a time delay difference.

In an embodiment, the first network function policy module is further configured to determine that the information for indicating the flow association relationship indicates that a service flow is a multi-modality flow, and/or that a service flow is a flow in a multi-modality flow, and/or that a service flow is a flow in a multi-flow packet. In other words, the information for indicating the flow association relationship indicates at least one information indicating that: a service flow is a multi-modality flow, a service flow is a flow in a multi-modality flow, or a service flow is a flow in a multi-flow packet.

In an embodiment, the first network function policy module is further configured to determine the time delay difference indicating an end to end time delay difference between a plurality of flows, or a radio interface time delay difference between a plurality of flows, or a network time delay difference between a plurality of flows.

In an embodiment, the first network function policy module is further configured to determine the first policy based on a first parameter provided by a second network function.

In an embodiment, the first network function policy module is further configured to determine the first policy based on the first parameter including one or more of: an application requirement, a policy requirement, an terminal ID, a terminal address, an application function identifier, a flow description, a QoS requirement, an alternative QoS, a flow time delay requirement, a flow time delay, a time delay difference between a plurality of flows, a service flow rate, a maximum data burst volume, an association ID, a bandwidth, or a delay difference.

In an embodiment, the first network function is one or more of: a PCF, an NEF, a RAN, an NG-RAN, or a base station.

In an embodiment, the multi-flow coordination transmission or the multi-flow coordination handling is configured to support that a plurality of service flows arrive simultaneously at a terminal and/or an application server and/or a base station and/or a UPF, or maintain that a plurality of service flows arrive at a terminal and/or an application server and/or a base station and/or a UPF with a constant time delay difference, or ensure that a plurality of service flows arrive at a terminal or an application server or a base station or a UPF within a required time delay difference. Here, a terminal and/or an application server and/or a base station and/or a UPF refer to at least one of a terminal, an application server, a base station or a UPF.

In an embodiment, the second network function is one or a combination of: an AF, an NEF, a third-party server, or an SMF.

In an embodiment, the first network function policy module is further configured to determine, in the case that information for indicating a time delay difference does not satisfy a flow time delay requirement, that the first network function sends a first notification to a fourth network function, and the fourth network function adjusts an application layer.

In an embodiment, in the case that the information for indicating a time delay difference does not satisfy a flow time delay requirement, the first network function performs adjustment based on a first rule.

In an embodiment, the first rule is PCC rules.

In an embodiment, the fourth network function is at least one of: an AF, an edge application, an edge application server, an edge application platform, or an NEF.

In an embodiment, the first network function policy module is further configured to send a first notification including at least one of: a flow time delay, a time delay difference, a delay difference, an inter-flow time delay difference, or a time delay difference policy.

Optionally, the first network function policy module further includes an updating module, configured to receive a second notification from a first entity and update the first policy.

Optionally, updating the first policy includes at least one of: decreasing or increasing QoS priority levels of all correlation flows; decreasing or increasing QoS priority levels of part of correlation flows; releasing all correlation flows; releasing part of correlation flows; removing a correlation of all correlation flows; removing a correlation of part of correlation flows.

Optionally, the updating module is further configured to send an updated first policy to at least one of: a first entity, a base station where correlation flows are located, an access network, an SMF, or a UPF.

For convenience of description, the device (the first network function) described above is described by individual parts that are divided into various modules or units by respective functions. Of course, the respective functions of the modules or units may be implemented in one or more software or hardware in embodiments of the present disclosure.

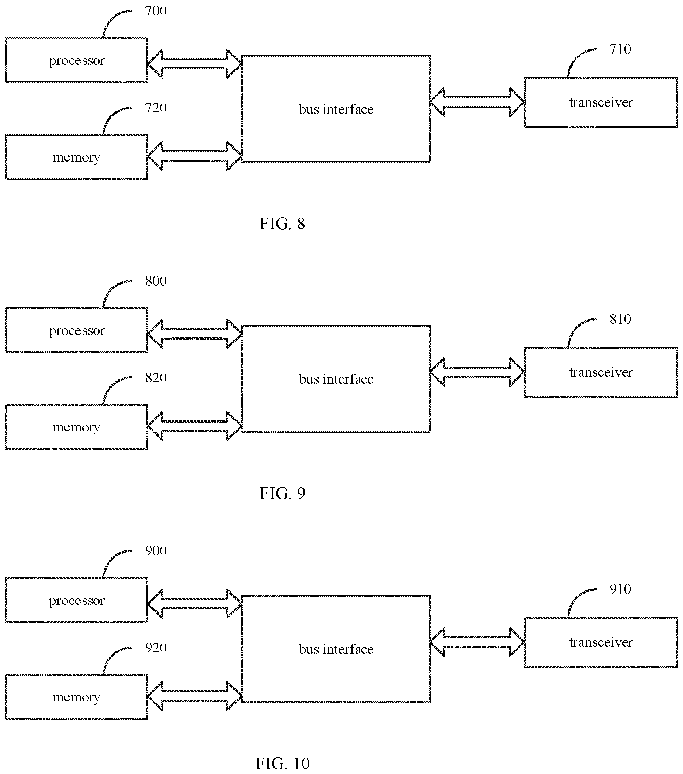

FIG. 8 is a block diagram illustrating an architecture of a first entity. As shown in FIG. 8, the first entity includes a processor 700, a transceiver 710 and a memory 720.

The processor 700 is configured to read a program in the memory 720 and perform receiving a second policy, sent directly or indirectly by a first network function.

The transceiver 710 is configured to receive and send data under a control of the processor 700.

In an embodiment, the second policy is configured for multi-flow coordination transmission or multi-flow coordination handling.

In an embodiment, the second policy includes one or more of: a multi-modality flow network policy, a multi-flow packet network policy, a flow network policy, an association network policy or a coordination network policy, information for indicating a flow association relationship, a time delay, a time delay difference, a rate, a maximum data burst volume, an alternative QoS, or a jitter requirement.

In an embodiment, the jitter requirement is a radio interface jitter requirement for a base station or an end to end jitter requirement for a base station.

In an embodiment, the multi-flow coordination transmission or the multi-flow coordination handling is configured to support that a plurality of service flows arrive simultaneously at a terminal and/or an application server and/or a base station, or maintain that a plurality of service flows arrive at a terminal and/or an application server and/or a base station with a constant time delay difference, or ensure that a plurality of service flows arrive at a terminal and/or an application server and/or a base station within a required time delay difference.

In an embodiment, in the case that the alternative QoS is used in an insufficient or congested network resource, the first entity selects a suitable QoS policy in the alternative QoS.

In an embodiment, the first entity selects the suitable QoS policy in the alternative QoS and sends a notification to a third network function.

In an embodiment, the first entity selects a QoS policy in the alternative QoS based on an association relationship between service flows, and/or a time delay difference between the service flows.

In an embodiment, the first entity receives the second policy in the case that a session is established and/or a session is updated.

In an embodiment, the first entity is one or more of: an access network, a terminal, a base station, or an AMF.

In an embodiment, the third network function is one or a combination of: a PCF, an AMF, an SMF, or an AF.

Optionally, the transceiver 710 is further configured to send a second notification to the first network function

Optionally, the second notification indicates one or more of: information of being unable to currently guarantee a transmission of a first flow; information of being unable to currently guarantee a QoS of a first flow; a currently supported maximum GBR of a first flow; a currently supported maximum Non-GBR of a first flow; a currently supported time delay of a first flow; or a currently supported bandwidth of a first flow.

In FIG. 8, a bus architecture may include any number of interconnected buses and bridges, which are specifically linked together by one or more processors represented by the processor 700 and various circuits of a memory represented by the memory 720. The bus architecture may also link together various other circuits, such as a peripheral device, a voltage regulator, and a power management circuit, etc., which are well known in the art, and therefore are not further described herein. A bus interface provides an interface. The transceiver 710 may be more than one element, i.e., includes a transmitter and a receiver, and provides units for communicating with other various devices on a transmission medium. The processor 700 is responsible for managing the bus architecture and general processing. The memory 720 may store data used by the processor 700 when performing operations.

The present disclosure provides in an embodiment a first entity, including a first entity receiving module, configured to receive a second policy, sent directly or indirectly by a first network function.

In an embodiment, the first entity receiving module is further configured to receive a second policy configured for multi-flow coordination transmission or multi-flow coordination handling.

In an embodiment, the first entity receiving module is further configured to receive a second policy including one or more of: a multi-modality flow network policy, a multi-flow packet network policy, a flow network policy, an association network policy or a coordination network policy, information for indicating a flow association relationship, a time delay, a time delay difference, a rate, a maximum data burst volume, an alternative QoS, or a jitter requirement.

In an embodiment, the jitter requirement is a radio interface jitter requirement for a base station or an end to end jitter requirement for a base station.

In an embodiment, the multi-flow coordination transmission or the multi-flow coordination handling is configured to support that a plurality of service flows arrive simultaneously at a terminal and/or an application server and/or a base station, or maintain that a plurality of service flows arrive at a terminal and/or an application server and/or a base station with a constant time delay difference, or ensure that a plurality of service flows arrive at a terminal and/or an application server and/or a base station within a required time delay difference.

In an embodiment, the first entity receiving module is further configured to, in the case that the alternative QoS is used in an insufficient or congested network resource, select a suitable QoS policy in the alternative QoS.

In an embodiment, the first entity receiving module is further configured to select the suitable QoS policy in the alternative QoS and send a notification to a third network function.

In an embodiment, the first entity receiving module is further configured to select a QoS policy in the alternative QoS based on an association relationship between service flows, and/or a time delay difference between the service flows.

In an embodiment, the first entity receiving module is further configured to receive the second policy in the case that a session is established and/or a session is updated.

In an embodiment, the first entity may be one or more of: an access network, a terminal, a base station, or an AMF.

In an embodiment, the third network function is one or a combination of: a PCF, an AMF, an SMF, or an AF.

Optionally, the first entity further includes: a sending module, configured to send a second notification to the first network function.

Optionally, the second notification indicates one or more of: information of being unable to currently guarantee a transmission of a first flow; information of being unable to currently guarantee a QoS of a first flow; a currently supported maximum GBR of a first flow; a currently supported maximum Non-GBR of a first flow; a currently supported time delay of a first flow; or a currently supported bandwidth of a first flow.

For convenience of description, the device (the first entity) described above is described by individual parts that are divided into various modules or units by respective functions. Of course, the respective functions of the modules or units may be implemented in one or more software or hardware in embodiments of the present disclosure.

FIG. 9 is a block diagram illustrating an architecture of a second entity. As shown in FIG. 9, the second entity includes a processor 800, a transceiver 810 and a memory 820.

The processor 800 is configured to read a program in a memory 820, and perform receiving a third policy, sent directly or indirectly by a first network function.

The transceiver 810 is configured to receive and send data under a control of the processor 800.

In an embodiment, the third policy is configured for multi-flow coordination transmission or multi-flow coordination handling.

In an embodiment, the multi-flow coordination transmission or the multi-flow coordination handling is configured to support that a plurality of service flows arrive simultaneously at a terminal and/or an application server and/or a base station, or maintain that a plurality of service flows arrive at a terminal and/or an application server and/or a base station with a constant time delay difference, or ensure that a plurality of service flows arrive at a terminal and/or an application server and/or a base station within a required time delay difference.

In an embodiment, the third policy is one or more of: a multi-modality flow network policy, a flow network policy, an association network policy or a coordination network policy, information for indicating a flow association relationship, a time delay, a time delay difference, a rate, or a maximum data burst volume.

In an embodiment, the second entity receives the third policy in the case that a session is established and/or a session is updated.

In an embodiment, the second entity includes one or more of: an SMF or a UPF.

In FIG. 9, a bus architecture may include any number of interconnected buses and bridges, which are specifically linked together by one or more processors represented by the processor 800 and various circuits of a memory represented by the memory 820. The bus architecture may also link together various other circuits, such as a peripheral device, a voltage regulator, and a power management circuit, etc., which are well known in the art, and therefore are not further described herein. A bus interface provides an interface. The transceiver 810 may be more than one element, i.e., includes a transmitter and a receiver, and provides units for communicating with other various devices on a transmission medium. The processor 800 is responsible for managing the bus architecture and general processing. The memory 820 may store data used by the processor 800 when performing operations.

The present disclosure provides in an embodiment a second entity, including a second entity receiving module, configured to receive a second policy, sent directly or indirectly by a first network function.

In an embodiment, the second entity receiving module is further configured to receive a third policy configured for multi-flow coordination transmission or multi-flow coordination handling.

In an embodiment, the multi-flow coordination transmission or the multi-flow coordination handling is configured to support that a plurality of service flows arrive simultaneously at a terminal and/or an application server and/or a base station, or maintain that a plurality of service flows arrive at a terminal and/or an application server and/or a base station with a constant time delay difference, or ensure that a plurality of service flows arrive at a terminal and/or an application server and/or a base station within a required time delay difference.

In an embodiment, the second entity receiving module is further configured to receive a third policy including one or more of: a multi-modality flow network policy, a flow network policy, an association network policy or a coordination network policy, information for indicating a flow association relationship, a time delay, a time delay difference, a rate, or a maximum data burst volume.

In an embodiment, the second entity receives the third policy in the case that a session is established and/or a session is updated.

In an embodiment, the second entity includes one or more of: an SMF or a UPF.

For convenience of description, the device (the second entity) described above is described by individual parts that are divided into various modules or units by respective functions. Of course, the respective functions of the modules or units may be implemented in one or more software or hardware when implementing the present disclosure.

FIG. 10 is a block diagram illustrating an architecture of a first network function. As shown in FIG. 10, the first network function includes a processor 900, a transceiver 910 and a memory 920.

The processor 900 is configured to read a program in the memory 920 and perform determining PCC rules based on a first parameter including a parameters of correlation flows.

The transceiver 910 is configured to receive and send data under a control of the processor 900.

In an embodiment, the correlation flows are flows in one same packet.

In an embodiment, the parameter of the correlation flows includes a correlation QoS flow ID and/or an alternative QoS.

In an embodiment, the PCC rules include: a QoS of the correlation flows and an alternative QoS of the correlation flows.

In an embodiment, the PCC rules include: an association relationship between a QoS of the correlation flows and an alternative QoS of the correlation flows.

In an embodiment, the processor 900 is further configured to perform receiving a first parameter sent directly or indirectly by a second network function.

In an embodiment, the first network function is one or a combination of: a PCF, an NEF, or a RAN.

In an embodiment, the second network function is one or a combination of: an AF, an NEF, a third-party server, or an SMF.

In an embodiment, the processor 900 is further configured to perform sending the PCC rules directly or indirectly to a first entity.

In an embodiment, the PCC rules are configured to adjust a QoS flow by the first entity.

In FIG. 10, a bus architecture may include any number of interconnected buses and bridges, which are specifically linked together by one or more processors represented by the processor 900 and various circuits of a memory represented by the memory 920. The bus architecture may also link together various other circuits, such as a peripheral device, a voltage regulator, and a power management circuit, etc., which are well known in the art, and therefore are not further described herein. A bus interface provides an interface. The transceiver 910 may be more than one element, i.e., includes a transmitter and a receiver, and provides units for communicating with other various devices on a transmission medium. The processor 900 is responsible for managing the bus architecture and general processing. The memory 920 may store data used by the processor 900 when performing operations.

The present disclosure provides in an embodiment a first network function, including a first network function adjusting module, configured to determine PCC rules based on a first parameter including a parameter of correlation flows.

In an embodiment, the first network function adjusting module is further configured to determine that the correlation flows are flows in one same packet.

In an embodiment, the first network function adjusting module is further configured to determine that the parameter of the correlation flows includes a correlation QoS flow ID and/or an alternative QoS.

In an embodiment, the first network function adjusting module is further configured to determine that the PCC rules include a QoS of the correlation flows and an alternative QoS of the correlation flows.

In an embodiment, the first network function adjusting module is further configured to determine that the PCC rules include an association relationship between a QoS of the correlation flows and an alternative QoS of the correlation flows.

In an embodiment, the first network function further includes: a first network function receiving module, configured to receive a first parameter sent directly or indirectly by a second network function.

In an embodiment, the first network function is one or a combination of: a PCF, an NEF, or a RAN.

In an embodiment, the second network function is one or a combination of: an application function, a network exposure function, a third-party server, or an SMF.

In an embodiment, the first network function further includes: a first network function sending module, configured to send the PCC rules directly or indirectly to the first entity.

In an embodiment, the first network function sending module is further configured to send the PCC rules for adjusting a QoS flow by the first entity.

For convenience of description, the device (the first network function) described above is described by individual parts that are divided into various modules or units by respective functions. Of course, the respective functions of the modules or units may be implemented in one or more software or hardware in embodiments of the present disclosure.

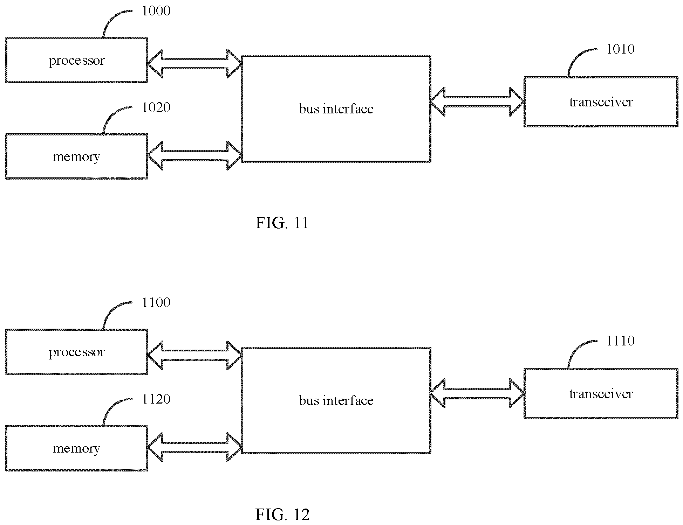

FIG. 11 is a block diagram illustrating an architecture of a second network function. As shown in FIG. 11, the second network function includes a processor 1000, a transceiver 1010 and a memory 1020.

The processor 1000 is configured to read a program in a memory 1020, and perform sending a first parameter directly or indirectly to a first network function, for determination of PCC rules by the first network function based on the first parameter including a parameter of correlation flows.

The transceiver 1010 is configured to receive and send data under a control of the processor 1000.

In an embodiment, the first parameter further includes one or a combination of: a terminal address, an application function identifier, a flow description, a QoS reference, or an alternative QoS.

In an embodiment, the correlation flows are flows in one same packet.

In an embodiment, the parameter of the correlation flows includes a correlation QoS flow ID and/or an alternative QoS.

In FIG. 11, a bus architecture may include any number of interconnected buses and bridges, which are specifically linked together by one or more processors represented by the processor 1000 and various circuits of a memory represented by the memory 1020. The bus architecture may also link together various other circuits, such as a peripheral device, a voltage regulator, and a power management circuit, etc., which are well known in the art, and therefore are not further described herein. A bus interface provides an interface. The transceiver 1010 may be more than one element, i.e., includes a transmitter and a receiver, and provides units for communicating with other various devices on a transmission medium. The processor 1000 is responsible for managing the bus architecture and general processing. The memory 1020 may store data used by the processor 1000 when performing operations.

The present disclosure provides in an embodiment a second network function, including a second network function sending module, configured to send a first parameter directly or indirectly to a first network function, for determination of PCC rules by the first network function based on the first parameter, in which the second network function sending module is further configured to send the first parameter including a parameter of correlation flows.

In an embodiment, the second network function sending module is further configured to send the first parameter further including one or a combination of: a terminal address, an application function identifier, a flow description, a QoS reference, or an alternative QoS.

In an embodiment, the second network function sending module is further configured to send correlation flows being flows in one same packet.

In an embodiment, the second network function sending module is further configured to send the parameter of the correlation flows including a correlation QoS flow ID and/or an alternative QoS.

For convenience of description, the device (the second network function) described above is described by individual parts that are divided into various modules or units by respective functions. Of course, the respective functions of the modules or units may be implemented in one or more software or hardware in embodiments of the present disclosure.

FIG. 12 is a block diagram illustrating an architecture of a first entity. As shown in FIG. 12, the first entity includes a processor 1100, a transceiver 1110 and a memory 1120.

The processor 1100 is configured to read a program in a memory 1120, and perform adjusting a QoS of a QoS flow based on PCC rules sent directly or indirectly by a first network function.

The transceiver 1110 is configured to receive and send data under a control of the processor 1100.

In an embodiment, the PCC rules include: a QoS of the correlation flows and an alternative QoS of the correlation flows.

In an embodiment, the PCC rules include: an association relationship between a QoS of the correlation flows and an alternative QoS of the correlation flows.

In an embodiment, adjusting the QoS of the QoS flow includes: selecting a suitable alternative QoS for the QoS flow with consideration of the current state of a correlation QoS flow.

In FIG. 12, a bus architecture may include any number of interconnected buses and bridges, which are specifically linked together by one or more processors represented by the processor 1100 and various circuits of a memory represented by the memory 1120. The bus architecture may also link together various other circuits, such as a peripheral device, a voltage regulator, and a power management circuit, etc., which are well known in the art, and therefore are not further described herein. A bus interface provides an interface. The transceiver 1110 may be more than one element, i.e., includes a transmitter and a receiver, and provides units for communicating with other various devices on a transmission medium. The processor 1100 is responsible for managing the bus architecture and general processing. The memory 1120 may store data used by the processor 1100 when performing operations.

The present disclosure provides in an embodiment a first entity, including a first entity adjusting module, configured to adjust a QoS of a QoS flow based on PCC rules sent directly or indirectly by a first network function.

In an embodiment, the first entity adjusting module is further configured to determine that the PCC rules include a QoS of the correlation flows and an alternative QoS of the correlation flows.

In an embodiment, the first entity adjusting module is further configured to determine that the PCC rules include an association relationship between a QoS of the correlation flows and an alternative QoS of the correlation flows.

In an embodiment, the first entity adjusting module is further configured to adjust a QoS of a QoS flow by selecting a suitable alternative QoS for the QoS flow with consideration of a current state of a correlation QoS flow.

For convenience of description, the device (the first entity) described above is described by individual parts that are divided into various modules or units by respective functions. Of course, the respective functions of the modules or units may be implemented in one or more software or hardware in embodiments of the present disclosure.

The present disclosure provides in an embodiment a computer-readable storage medium having stored a computer program that, when executed by a processor, implements the method for adjusting a QoS on a first network function side, the method for adjusting a QoS on a second network function side, or the method for adjusting a QoS on a first entity side.

The specific embodiments may refer to the embodiments of the method for adjusting a QoS on a first network function side, the method for adjusting a QoS on a second network function side, or the method for adjusting a QoS on a first entity side.

In summary, according to embodiments of the present disclosure, with the concept of the association QoS flow ID (QFI) packet introduced, the QoS flows in the packet are not changed separately, but rather the QoSs are adjusted based on the situation of the current packet.

It is additionally introduced with a table indicating the relationship between QFIs. When adjusting the QoS for one flow, it is required for the PCF to consider the AF request, the network state, the current QoS state of the association QFIs, for determination on whether to upgrade/degrade/maintain the QoS flow.

When resources cannot be guaranteed for NG-RAN, it is necessary for the QoS adjustment to consider the current state of the association QFI, and then to select the suitable alternative QoS to upgrade or downgrade the resources.

It is only considered in the related art an adjustment of a quality of service (QoS) for a single flow. However, a haptic communication and a multimedia enhanced communication usually involve multiple types of service flows, e.g., a video, audio, haptic, and kinesthetic signal, which require mutual cooperation, instead of existing separately, for complete and excellent experience for users. In embodiments of the present disclosure, the QoS of a certain service flow will be downgraded, if the NG-RAN is unable to satisfy requirement for the QoS of said service flow. In the haptic communication and the multimedia enhanced communication, the greatly downgraded QoS of a certain service may affect the whole service. For example, a severely blurred picture will be given if kinesthetic signal transmission is normal, whereas the video flow is downgraded greatly, resulting in a difficulty in accurately determining how to operate the device by eyes. Therefore, it is required to comprehensively considerate respective QoS flows of one same service for adjusting the service during QoS adjustment, thereby guaranteeing overall service experience for users.

Those skilled in the art would understand that embodiments of the present disclosure may be provided as a method, a system, or a computer program product. Thus, the present disclosure may take the form of an entirely hardware embodiment, an entirely software embodiment, or embodiments incorporating software and hardware aspects. Moreover, the present disclosure may take the form of a computer program product implemented on one or more computer-readable storage media (including but not limited to a disk memory and an optical memory, etc.) including computer-usable program code.

The present disclosure is described according to a flowchart and/or block diagram of a method, a device (system), and a computer program product according to the embodiments of the present disclosure. It should be understood that each process and/or block in the flowchart and/or a block diagram, and a combination of a process and/or block in in the flowchart and/or a block diagram may be implemented by computer program instructions. These computer program instructions may be provided to a processor of a general purpose computer, special purpose computer, embedded processor, or other programmable data processing device to generate a machine, such that when instructions are executed by the processor of the computer or other programmable data processing device, an apparatus for implementing a function specified in one or more processes in the flowchart and/or one or more blocks in the block diagram is generated.

These computer program instructions may also be stored in a computer-readable memory that can direct a computer or other programmable data processing device to work in a particular manner such that the instructions stored in the computer-readable memory produce a product that includes an instruction device that is implemented a function specified in one or more processes in the flowchart and/or one or more blocks in the block diagram.

These computer program instructions may also be loaded to a computer or other programmable data processing device such that a series of operational steps are performed on a computer or other programmable device to produce a computer-implemented process, such that instructions executed on a computer or other programmable device provide for implementation steps specified in one or more processes in the flowchart and/or one or more blocks in the block diagram.

It may be understood that these embodiments described in the present disclosure may be implemented by hardware, software, firmware, middleware, microcode, or a combination thereof. For hardware implementations, modules, units, sub-modules, subunits, etc., may be implemented in one or more Application Specific Integrated Circuits (ASICs), Digital Signal Processing (DSP), Digital Signal Processing Devices (DSP Device, DSPDs), Programmable Logic Devices (PLDs), Field-Programmable Gate Arrays (FPGAs), general-purpose processors, controllers, microcontrollers, microprocessors, other electronic units for performing the functions of the present disclosure, or a combination thereof.

Obviously, those skilled in the art may make various modifications and variations to the present disclosure without departing from the spirit and scope of the present disclosure. Thus, if these modifications and variations of the present disclosure fall within the scope of the claims and their equivalents, the present disclosure is also intended to encompass these modifications and variations.

## Claims

1. A method for policy control, comprising:
determining a first policy by a first network function based on a first parameter.

2. The method according to claim 1, wherein the first policy is configured for multi-flow coordination transmission or multi-flow coordination handling.

3. The method according to claim 1, wherein the first policy is one or more of:
a multi-modality flow network policy, a multi-flow network policy, a multi-flow packet network policy, a multi-flow coordination network policy, a coordination transmission network policy, or a coordination network policy.

4. The method according to claim 1, wherein the first policy comprises information for indicating a flow association relationship, and/or information for indicating a time delay difference.

5. The method according to claim 4, wherein the information for indicating the flow association relationship indicates that a service flow is a multi-modality flow, and/or that a service flow is a flow in a multi-modality flow, and/or that a service flow is a flow in a multi-flow packet.

6. The method according to claim 4, wherein the time delay difference indicates an end to end time delay difference between a plurality of flows, or a radio interface time delay difference between a plurality of flows, or a network time delay difference between a plurality of flows.

7. The method according to claim 1, wherein the first policy is determined by the first network function based on a first parameter provided by a second network function.

8. The method according to claim 1, wherein the first parameter comprises one or more of:
an application requirement, a policy requirement, an terminal identification (ID), a terminal address, an application function identifier, a flow description, a quality of service (QoS) requirement, an alternative QoS, a flow time delay requirement, a flow time delay, a time delay difference between a plurality of flows, a service flow rate, a maximum data burst volume, an association ID, a bandwidth, or a delay difference.

9. The method according to claim 1, wherein the first network function is one or more of:
a policy control function (PCF), a network exposure function (NEF), a radio access network (RAN), a next generation radio access network (NG-RAN), or a base station.

10. The method according to claim 2, wherein the multi-flow coordination transmission or the multi-flow coordination handling is configured to support that a plurality of service flows arrive simultaneously at a terminal and/or an application server and/or a base station and/or a user plane function (UPF), or maintain that a plurality of service flows arrive at a terminal and/or an application server and/or a base station and/or a UPF with a constant time delay difference, or ensure that a plurality of service flows arrive at a terminal or an application server or a base station or a UPF within a required time delay difference.

11. The method according to claim 7, wherein the second network function is one or a combination of: an application function (AF), a network exposure function (NEF), a third-party server, or a session management function (SMF).

12. The method according to claim 1, wherein in the case that information for indicating a time delay difference does not satisfy a flow time delay requirement, the first network function sends a first notification to a fourth network function, and the fourth network function adjusts an application layer.

13. The method according to claim 1, wherein in the case that information for indicating a time delay difference does not satisfy a flow time delay requirement, the first network function performs adjustment based on a first rule.

14. The method according to claim 13, wherein the first rule is policy and charging control (PCC) rules.

15. The method according to claim 12, wherein the fourth network function is at least one of: an application function (AF), an edge application, an edge application server, an edge application platform, or a network exposure function (NEF).

16. The method according to claim 12, wherein the first notification comprises at least one of:
a flow time delay, a time delay difference, a delay difference, an inter-flow time delay difference, or a time delay difference policy.

17. The method according to any one of claims 1 to 9, further comprising:
the first network function receiving a second notification from a first entity and updating the first policy.

18. The method according to claim 17, wherein updating the first policy comprises at least one of:
decreasing or increasing QoS priority levels of all correlation flows;
decreasing or increasing QoS priority levels of part of correlation flows;
releasing all correlation flows;
releasing part of correlation flows;
removing a correlation of all correlation flows;
removing a correlation of part of correlation flows.

19. The method according to claim 17, further comprising:
sending an updated first policy by the first network function to at least one of: a first entity, a base station where correlation flows are located, an access network, a session management function (SMF), or a user plane function (UPF).

20. A method for policy control, comprising:
receiving a second policy by a first entity, wherein the second policy is sent directly or indirectly by a first network function.

21. The method according to claim 20, wherein the second policy is configured for multi-flow coordination transmission or multi-flow coordination handling.

22. The method according to claim 20, wherein the second policy comprises one or more of:
a multi-modality flow network policy, a multi-flow packet network policy, a flow network policy, an association network policy or a coordination network policy, information for indicating a flow association relationship, a time delay, a time delay difference, a rate, a maximum data burst volume, an alternative quality of service (QoS), or a jitter requirement.

23. The method according to claim 22, wherein the jitter requirement is a radio interface jitter requirement for a base station or an end to end jitter requirement for a base station.

24. The method according to claim 21, wherein the multi-flow coordination transmission or the multi-flow coordination handling is configured to support that a plurality of service flows arrive simultaneously at a terminal and/or an application server and/or a base station, or maintain that a plurality of service flows arrive at a terminal and/or an application server and/or a base station with a constant time delay difference, or ensure that a plurality of service flows arrive at a terminal and/or an application server and/or a base station within a required time delay difference.

25. The method according to claim 22, wherein in the case that the alternative QoS is used in an insufficient or congested network resource, the first entity selects a suitable QoS policy in the alternative QoS.

26. The method according to claim 25, wherein the first entity selects the suitable QoS policy in the alternative QoS and sends a notification to a third network function.

27. The method according to claim 25, comprising: selecting a QoS policy in the alternative QoS by the first entity based on an association relationship between service flows, and/or a time delay difference between the service flows.

28. The method according to claim 20, comprising: receiving the second policy by the first entity in the case that a session is established and/or a session is updated.

29. The method according to claim 20, wherein the first entity is one or more of: an access network, a terminal, a base station, or an access and mobility management function (AMF).

30. The method according to claim 26, wherein the third network function is one or a combination of: a policy control function (PCF), an access and mobility management function (AMF), a session management function (SMF), or an application function (AF).

31. The method according to any one of claims 20 to 21, further comprising:
sending by the first entity, a second notification to the first network function.

32. The method according to 31, wherein the second notification indicates one or more of:
information of being unable to currently guarantee a transmission of a first flow;
information of being unable to currently guarantee a QoS of a first flow;
a currently supported maximum guaranteed bit rate (GBR) of a first flow;
a currently supported maximum non-guaranteed bit rate (NGBR) of a first flow;
a currently supported time delay of a first flow; or
a currently supported bandwidth of a first flow.

33. A method for policy control, comprising:
receiving a third policy by a second entity, wherein the third policy is sent directly or indirectly by a first network function.

34. The method according to claim 33, wherein the third policy is configured for multi-flow coordination transmission or multi-flow coordination handling.

35. The method according to claim 34, wherein the multi-flow coordination transmission or the multi-flow coordination handling is configured to support that a plurality of service flows arrive simultaneously at a terminal and/or an application server and/or a base station, or maintain that a plurality of service flows arrive at a terminal and/or an application server and/or a base station with a constant time delay difference, or ensure that a plurality of service flows arrive at a terminal and/or an application server and/or a base station within a required time delay difference.

36. The method according to claim 33, wherein the third policy comprises one or more of:
a multi-modality flow network policy, a flow network policy, an association network policy or a coordination network policy, information for indicating a flow association relationship, a time delay, a time delay difference, a rate, or a maximum data burst volume.

37. The method according to claim 33, comprising: receiving the third policy by the second entity in the case that a session is established and/or a session is updated.

38. The method according to claim 33, wherein the second entity comprises one or more of: a session management function (SMF) or a user plane function (UPF).

39. A first network function, comprising:
a processor, configured to read a program in a memory, and perform determining a first policy based on a first parameter;
a transceiver, configured to receive and send data under a control of the processor.

40. A first network function, comprising:
a first network function policy module, configured to determine a first policy based on a first parameter.

41. A first entity, comprising:
a processor, configured to read a program in a memory, and perform receiving a second policy, wherein the second policy is sent directly or indirectly by a first network function;
a transceiver, configured to receive and send data under a control of the processor.

42. A first entity, comprising:
a first entity receiving module, configured to receive a second policy, wherein the second policy is sent directly or indirectly by a first network function.

43. A second entity, comprising:
a processor, configured to read a program in a memory, and perform receiving a third policy, wherein the third policy is sent directly or indirectly by a first network function;
a transceiver, configured to receive and send data under a control of the processor.

44. A second entity, comprising:
a second entity receiving module, configured to receive a second policy, wherein the second policy is sent directly or indirectly by a first network function.

45. A computer-readable storage medium having stored a computer program that, when executed by a processor, implements the method according to any one of claims 1 to 33.
